# EUROPEAN PATENT APPLICATION

(11) **EP 4 568 162 A1**
(43) Date of publication of application: **11.06.2025**
(21) Application number: 22953546.3
(22) Date of filing: 03.08.2022
(51) Int. Cl.: H04L 9/00

(54) **AUTHENTICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); HUANG, Lei, 049483 Singapore (SG)
(74) Representative: Novagraaf Technologies
(86) International application number: PCT/CN2022/109986
(87) International publication number: WO 2024/026735

(57) **Abstract**

The present application relates to the field of wireless communications. Disclosed are an authentication method and apparatus, a device, and a storage medium. The method is executed by a station (STA) and an AP. The method comprises: transmitting an authentication frame between an STA and an AP, so as to execute an authentication process, wherein a field in the authentication frame indicates that identity authentication is executed by using at least one of the following authentication modes: extended PASN that supports FILS shared key authentication having perfect forward secrecy, extended PASN that supports FILS public key authentication, and extended PASN that supports 802.1X authentication; using a PTK which is generated during the authentication process to protect a message in the process of establishing an association between the STA and the AP, wherein the message comprises at least one of an association request message, a response message, a four-way-handshake message and a group key handshake message; and after the association is established, continuing using the PTK, which is generated during the authentication process, to perform data communication; or creating a new PTK after the association is established, and using new PTS to perform data communication.

## Description

### TECHNICAL FIELD

The present disclosure relates to the field of wireless communications, and in particular, relates to a method and apparatus for authentication, and a device and a storage medium thereof.

### RELATED ART

A Wi-Fi (wireless fiedelity, a wireless network communication technology) connection includes a probing stage, an authentication stage, and an association stage. At the probing stage, a station (STA) discovers an access point (AP). At the authentication stage, the AP authenticates the STA. Upon successful authentication, the STA accesses the AP at the association stage.

As stipulated in the Institute of Electrical and Electronics Engineers (IEEE) 802.11az protocol, in an infrastructure basic service set (BSS) network, an STA that has not established an association with an AP is allowed to establish a pairwise transient key security associatioin (PTKSA) with the AP by a pre-association security negotiation (PASN) process. Related arts provide an extended PASN approach to protect association request and response messages. The approach extends base authentication and key management (base AKM) used in the PASN.

### SUMMARY

Embodiments of the present disclosure provide a method and apparatus for authentication, and a device and a storage medium thereof. The technical solutions are as follows.

According to one aspect of the embodiments of the present disclosure, a method for authentication is provided. The method is applicable to an STA. The method includes: performing an authentication process by transmitting authentication frames between the STA and an AP, wherein a first field in the authentication frame indicates that at least one of the following authentication modes is used: extended PASN supporting FILS shared key authentication with perfect forward security, extended PASN supporting FILS public key authentication, or extended PASN supporting 802.1X authentication.

According to another aspect of the embodiments of the present disclosure, a method for authentication is provided. The method is applicable to an AP. The method includes: performing an authentication process by transmitting an authentication frame between the AP and an STA, wherein a first field in the authentication frame indicates that at least one of the following authentication modes is used: extended PASN supporting FILS shared key authentication with perfect forward security, extended PASN supporting FILS public key authentication, or extended PASN supporting 802.1X authentication.

According to another aspect of the embodiments of the present disclosure, an apparatus for authentication is provided. The apparatus includes: a first authenticating module, configured to perform an authentication process by transmitting an authentication frame between an STA and an AP, wherein a first field in the authentication frame indicates that at least one of the following authentication modes is used: extended PASN supporting FILS shared key authentication with perfect forward security, extended PASN supporting FILS public key authentication, or extended PASN supporting 802.1X authentication.

According to another aspect of the embodiments of the present disclosure, an apparatus for authentication is provided. The apparatus includes: a second authenticating module, configured to perform an authentication process by transmitting an authentication frame between and AP and an STA, wherein a first field in the authentication frame indicates that at least one of the following authentication modes is used: extended PASN supporting FILS shared key authentication with perfect forward security, extended PASN supporting FILS public key authentication, or extended PASN supporting 802.1X authentication.

According to another aspect of the embodiments of the present disclosure, a STA device is provided. The STA device includes: a processor; a transceiver, connected to the processor; and a memory, configured to store one or more executable instructions of the processor, wherein the processor, when loading and executing, the one or more executable instructions, causes the STA device to perform the methods for authentication as described above.

According to another aspect of the embodiments of the present disclosure, an access point (AP) device is provided. The AP device includes: a processor; a transceiver, connected to the processor; and a memory, configured to store one or more executable instructions of the processor, wherein the processor, when loading and executing the one or more executable instructions, causes the AP device to perform the methods for authentication as described above.

According to some embodiments of the present disclosure, a computer-readable storage medium is provided. The computer-readable storage medium stores one or more executable instructions. The one or more executable instructions, when loaded and executed by a processor, cause a communication device to perform the methods for authentication as described above.

According to another aspect of the embodiments of the present disclosure, a chip is provided. The chip includes one or more programmable logic circuits or programs. A communication device equipped with the chip, when running the one or more programmable logic circuits or programs, is caused to perform the methods for authentication as described above.

According to another aspect of the embodiments of the present disclosure, a computer program product is provided. The computer program product includes one or more computer instructions stored in a computer-readable storage medium. The one or more computer instructions, when read by a processor of a communication device from the computer-readable storage medium and executed by an authentication device, cause the communication device to perform the methods for authentication as described above.

The technical solutions according to the embodiments of the present disclosure include at least the following beneficial effects.

The capability of the first field in the authentication frame is enhanced, such that the first field can indicate that the extended PASN supporting FILS shared key authentication with perfect forward security (FILS shared key with PFS), the extended PASN supporting FILS public key authentication, or the extended PASN supporting 802.1X authentication is used for authentication. This clarifies how to extend the PASN to support the message format of the authentication modes described above.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a block diagram of a communication system according to some embodiments of the present disclosure;
FIG. 2 is a flowchart of a method for authentication according to some embodiments of the present disclosure;
FIG. 3 is a flowchart of a method for authentication according to some embodiments of the present disclosure;
FIG. 4 is a flowchart of a method for authentication according to some embodiments of the present disclosure;
FIG. 5 is a schematic diagram of an authentication frame according to some embodiments of the present disclosure;
FIG. 6 is a schematic diagram of an authentication frame according to some embodiments of the present disclosure;
FIG. 7 is a schematic diagram of an authentication frame according to some embodiments of the present disclosure;
FIG. 8 is a schematic diagram of an authentication frame according to some embodiments of the present disclosure;
FIG. 9 is a schematic diagram of an authentication frame according to some embodiments of the present disclosure;
FIG. 10 is a schematic diagram of an authentication frame according to some embodiments of the present disclosure;
FIG. 11 is a flowchart of a method for authentication according to some embodiments of the present disclosure;
FIG. 12 is a flowchart of a method for authentication according to some embodiments of the present disclosure;
FIG. 13 is a flowchart of a method for authentication according to some embodiments of the present disclosure;
FIG. 14 is a flowchart of a method for authentication according to some embodiments of the present disclosure;
FIG. 15 is a flowchart of a method for authentication according to some embodiments of the present disclosure;
FIG. 16 is a flowchart of a method for authentication according to some embodiments of the present disclosure;
FIG. 17 is a schematic diagram of an authentication frame according to some embodiments of the present disclosure;
FIG. 18 is a schematic diagram of an authentication frame according to some embodiments of the present disclosure;
FIG. 19 is a schematic diagram of an authentication frame according to some embodiments of the present disclosure;
FIG. 20 is a schematic diagram of an authentication frame according to some embodiments of the present disclosure;
FIG. 21 is a schematic diagram of an authentication frame according to some embodiments of the present disclosure;
FIG. 22 is a schematic diagram of an authentication frame according to some embodiments of the present disclosure;
FIG. 23 is a flowchart of a method for authentication according to some embodiments of the present disclosure;
FIG. 24 is a schematic diagram of an authentication frame according to some embodiments of the present disclosure;
FIG. 25 is a schematic diagram of an authentication frame according to some embodiments of the present disclosure;
FIG. 26 is a schematic diagram of an authentication frame according to some embodiments of the present disclosure;
FIG. 27 is a schematic diagram of an authentication frame according to some embodiments of the present disclosure;
FIG. 28 is a schematic diagram of an authentication frame according to some embodiments of the present disclosure;
FIG. 29 is a schematic diagram of an authentication frame according to some embodiments of the present disclosure;
FIG. 30 is a flowchart of a method for authentication according to some embodiments of the present disclosure;
FIG. 31 is a schematic diagram of an authentication frame according to some embodiments of the present disclosure;
FIG. 32 is a schematic diagram of an authentication frame according to some embodiments of the present disclosure;
FIG. 33 is a schematic diagram of an authentication frame according to some embodiments of the present disclosure;
FIG. 34 is a schematic diagram of an authentication frame according to some embodiments of the present disclosure;
FIG. 35 is a flowchart of a method for authentication according to some embodiments of the present disclosure;
FIG. 36 is a flowchart of a method for authentication according to some embodiments of the present disclosure;
FIG. 37 is a block diagram of an apparatus for authentication according to some embodiments of the present disclosure;
FIG. 38 is a block diagram of an apparatus for authentication according to some embodiments of the present disclosure; and
FIG. 39 is a schematic structural diagram of an authentication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Reference is made in detail to the embodiments, examples of which are illustrated in the accompanying drawings. When the following description refers to the accompanying drawings, the same numbers in different accompanying drawings represent the same or similar elements unless otherwise indicated. The embodiments described hereinafter do not represent all embodiments consistent with the present disclosure. Rather, these embodiments are merely examples of apparatus and methods consistent with some aspects of the present disclosure, as detailed in the appended claims.

The terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used in the present disclosure to describe various information, such information should not be limited to these terms. These terms are only used to distinguish one type of information from another. For example, first information may be referred to as second information, and similarly, second information may be referred to as first information, without departing from the scope of the present disclosure. The word "if," as used herein, may be interpreted as "in the case that," "in the case of," or "in response to determining that," depending on the context.

The technical solutions according to the embodiments of the present disclosure are applicable to various communication systems, such as a wireless local area network (WLAN) system, a wireless fidelity (Wi-Fi) system, or other communication systems.

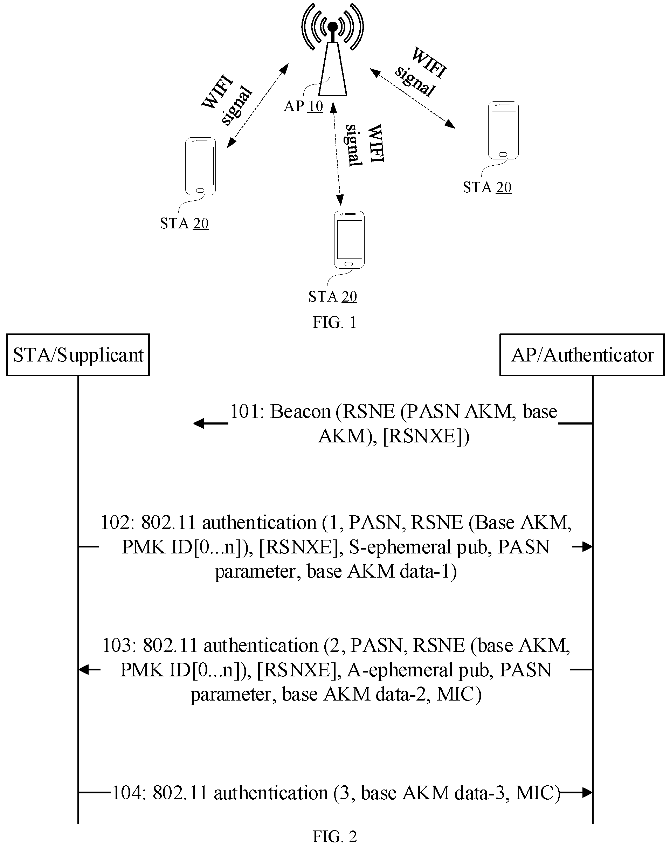

FIG. 1 is a block diagram of a communication system according to some embodiments of the present disclosure. The communication system includes an AP 10 and STAs 20, which is not limited in the present disclosure. In the present disclosure, the communication system is described by an example where an AP and an STA are included in the communication system. The AP/STA may also be referred to as a communication device or an authentication device.

In some scenarios, the AP is also referred to as an AP STA. That is, the AP is also an STA in some sense.

In some scenarios, the STA is also referred to as a non-AP STA. The communication within the communication system involves communication between an AP and a non-AP STA, between non-AP STAs, or between an STA and a peer STA. Herein, the peer STA refers to a device communicating with the STA at the peer, for example, the peer STA may be an AP or a non-AP STA.

It should be understood that the role of the STA in the communication system is not defined or limited. For example, in some scenarios, the mobile phone is a non-AP STA in the case that a mobile phone is connected to a router, and the mobile phone serves as an AP in the case that the mobile phone serves as a hotspot for other mobile phones to access.

In some embodiments, STAs include AP STAs and non-AP STAs.

The AP serves as a bridge between a wired network and a wireless network, and mainly functions as to connect various wireless network clients and then access the wireless network to the Ethernet. The AP may be a terminal device (such as a mobile phone) equipped with a Wi-Fi chip or a network device (such as a router).

It should be understood that the role of the STA in the communication system is not defined or limited. For example, in some scenarios, the mobile phone is a non-AP STA in the case that a mobile phone connects to a router, and the mobile phone serves as an AP in the case that the mobile phone serves as a hotspot for other mobile phones to access.

Both the AP and the non-AP STA are devices applicable to the Internet of vehicles, nodes and sensors in the Internet of things (IoT), smart cameras, smart remote controls, smart water meters and electricity meters in smart homes, sensors in smart cities, or the like.

In the embodiments of the present disclosure, the STA and the AP both support the IEEE 802.11 standard, but are not limited to the IEEE 802.11 standard.

In some embodiments, the non-AP STA supports, but is not limited to, the 802.11bf standard. The non-AP STA may also support various current and future WLAN standards of the 802.11 series, such as 802.11ax, 802.11ac, 802.11n, 802.11g, 802.11b, and 802.11a.

In some embodiments, the AP is a device that supports the 802.11bf standard. The AP is also a device that supports various current and future WLAN formats of the 802.11 series, such as 802.11ax, 802.11ac, 802.11n, 802.11g, 802.11b, 802.11a, or the like.

In the embodiments of the present disclosure, the STA may be a device that supports WLAN/WiFi technology, such as a mobile phone, a tablets (Pad), a computer, a virtual reality (VR) device, an augmented reality (AR) device, a wireless devices in industrial control, a set-top box, a wireless device in self-driving, an in-vehicle communication device, a wireless devices in remote medical, a wireless device in smart grids, a wireless device in transportation safety, a wireless device in smart cities, a wireless device in smart homes, or a wireless communication chip/ASIC/SOC.

Frequency bands supported by the WLAN technology include but are not limited to low-frequency bands (2.4 GHz, 5 GHz, and 6 GHz) and a high-frequency band (60 GHz).

One or more links are present between the STA and the AP.

In some embodiments, the STA and the AP support multi-band communications, e.g., simultaneous communications at 2.4 GHz, 5 GHz, 6 GHz, and 60 GHz bands, or simultaneous communications in different channels of the same frequency band (or different frequency bands), thereby improving the communication throughput and/or reliability between devices. Such devices are often referred to as multi-frequency-band devices, multi-link devices (MLDs), multi-link entities, or multi-frequency-band entities. The MLD is an AP device or an STA device. In the case that the MLD is an AP device, the MLD includes one or more APs. In the case that the MLD is an STA device, the MLD includes one or more non-AP STAs.

The multi-link device including one or more APs is also referred to as an AP, and the multi-link device including one or more non-AP STAs is also referred to as a non-AP. In the embodiments of the present disclosure, the non-AP is also referred to as an STA.

In the embodiments of the present disclosure, the AP may include a plurality of APs, the non-AP may include a plurality of STAs, a plurality of links may be formed between the APs in the AP and the STAs in the non-AP, and data communication may be performed between the APs in the AP and the corresponding STAs in the non-AP over the corresponding links.

The AP is a device deployed in a WLAN to provide a wireless communication function for the STA. The STA may include: a user equipment (UE), an access terminal, a subscriber unit, a subscriber station, a mobile station, a rover station, a remote station, a remote terminal, a mobile device, a wireless communication device, a user agent, a user apparatus, or the like. In some embodiments, the station is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

The following is an introduction to the technologies involved in the embodiments of the present disclosure.
**I: Three stages of WiFi connection**
**II: Pre-association security negotiation (PASN)**
**III: Pairwise master key security association (PMKSA)**
**IV: Pairwise transient key security association (PTKSA)**
**V: Group transient key secure association (GTKSA)**
**VI: Integrity group temporal key security association (IGTKSA)**
**VII: Beacon integrity group temporal key security association (BIGTKSA)**
**VIII: Fast initial link setup authentication (FILS authentication)**
**IX: FILS shared key without perfect forward security (PFS)**
**X: FILS shared key with perfect forward security (PFS)**
**XI: FILS public key**
**XII: 802.1X authentication**
**XIII: 4-way handshake**
**XIV: Group key handshake**
**XV: Simultaneous authentication of equals (SAE) authentication**

### I: Three stages of WiFi connection

The three stages include: a probing stage, an authentication stage, and an association stage.

### 1. Probing stage

Two modes for probing are available during the probing stage.
(1) The STA listens to Beacon frames that are periodically transmitted by the AP to discover networks. Beacon frames provide information related to the AP and the basic service set (BSS) to which the AP belongs.
(2) The STA transmits probe request frames sequentially on 13 channels. The frames carry the service set identifier (SSID) and the STA's capability information to find an AP with the same SSID as the STA transmits.

The AP replies with probe response frames, which carry the AP's capability information.

The purpose of the probing stage is to allow the STA to acquire the AP's capability to decide whether to access the network, and allow the AP to acquire the STA's capability and decide whether to allow the STA to access the network based on its own condition.

### 2. Authentication stage

After the STA receivies the probe response frame, the STA decides whether to access the network. In the case that the STA decides to access the network, the STA transmits authentication frames to authenticate itself; otherwise, the process ends.

### 3. Association stage

After the STA receives an authentication successful message and decides to access the network, the STA transmits an association request frame, wherein the association request frame specifies a type of a network the STA desires to access, a listen interval, and the STA's capability information.

After the AP receives the association request frame, the AP determines whether it can accept the listen interval and whether the STA's capability information matches. In the case that both conditions are met, the AP replies with an association response frame that carries an association ID (AID) and Successful information, indicating that the association is successful. Otherwise, the AP replies with an association response frame that carries Failed information.

### II: Pre-association eecurity negotiation (PASN)

According to the IEEE 802.11az protocol, as illustrated in FIG. 2, in an infrastructure BSS network, an STA that has not established an association with an AP may establish a PTKSA with the AP by a PASN procedure.

In some embodiments, as illustrated in FIG. 2, the PASN procedure includes the following processes.

In process 101, the AP periodically transmits Beacon frames.

The Beacon frame includes fields such as robust security network element (RSNE), PASN authentication and key management (AKM), base AKM, and robust security network extension element (RSNXE).

In process 102, the STA transmits an 802.11 authentication 1 frame (first authentication frame) to the AP.

The authentication 1 frame includes fields such as transaction sequence number assigned a value of 1 (indicating the authentication 1), PASN, RSNE, base AKM, pairwise master key (PMK) ID, RSNXE, S-ephemeral pub (the public key of the supplicant, i.e., the STA's public key), PASN parameters, and base AKM data-1.

In process 103, the AP transmits an 802.11 authentication 2 frame (second authentication frame) to the STA.

The authentication 2 frame includes fields such as transaction sequence number assigned a value of 2 (indicating the authentication 2), PASN, RSNE, base AKM, PMK ID, RSNXE, A-ephemeral pub (the public key of the authenticator, i.e., the AP's public key), PASN parameters, base AKM data-2, and message integrity code (MIC).

In process 104, the AP transmits an 802.11 authentication 3 frame (third authentication frame) to the STA.

The authentication 3 frame includes fields such as transaction sequence number assigned a value of 3 (indicating the authentication 3), base AKM data-3, and MIC.

Depending on the selected Authentication and Key Management Protocol (AKMP), the PTKSA generated by the PASN procedure may be mutually authenticated (i.e., the base AKMP is other authentication and key management protocol authentication ) or not be mutually authenticated (i.e., the base AKMP is the PASN AKMP identified by the identifier 00-0F-AC: 21). The PASN procedure supports to generate a pairwise master key security association (PMKSA) by other Authentication and Key Management Protocols (SAE (simultaneous authentication of equals) authentication identified by identifier 00-0F-AC:8, fast initial link setup (FILS) authentication identified by identifier 00-0F-AC:14, FILS authentication identified by identifier 00-0F-AC:15, FT (fast BSS transition) authentication identified by identifier 00-0F-AC:3, FT authentication identified by identifier 00-0F-AC:4, FT authentication identified by identifier 00-0F-AC:13, or FT authentication identified by identifier 00-0F-AC:19) using tunneling technology (i.e., embedding a message of another protocol into the protocol's message, such as wrapping an EAPOL (Extensible Authentication Protocol over LAN) frame in a wrapped data element, or wrapping an SAE authentication message body in a wrapped data element). The PASN procedure also supports the use of a cached PMKSA for authentication. The PASN procedure does not generate a GTKSA, an IGTKSA, and a BIGTKSA. For more details, reference may be made to IEEE 80211az_D5.0.

The method for generating a pairwise transient key (PTK) in the PASN procedure is as follows.
PTK = KDF-HASH-NNN (PMK, "PASN PTK Derivation", SPA ∥ BSS ID ∥ DHss)

KDF represents key derivation runction; HASH represents hash; NNN represents the number of bits, which is set based on actual requirements. "PASN PTK Derivation" is a fixed string.

In the case that the base AKMP is PASN AKMP, the PMK is the string "PMKz" padded with 28 ending characters (with a character value of 0). In the case that the base AKMP is not PASN AKMP, the PMK is generated by a corresponding method for authentication (i.e., other Authentication and Key Management Protocols mentioned above).

The DHss is a shared key generated by Diffie-Hellman (key exchange) process based on the public key of the supplicant (S-ephemeral pub) and the public key of the authenticator (A-ephemeral pub).

In the PASN authentication mode, the generated PTK may be mutually authenticated or not be mutually authenticated. In the case that the generated PTK is not mutually authenticated, the PTK cannot be used to protect unicast data frames and management frames. Moreover, the process does not generate a GTKSA, an IGTKSA, or a BIGTKSA. Therefore, multicast data frames cannot be protected or integrity checks on multicast management frames and Beacon frames cannot be performed.

### III: Pairwise master key security association (PMKSA)

A PMKSA is generally established by the IEEE 802.1X protocol (IEEE 802.1X exchange) process, or by the opportunistic wireless encryption (OWE) exchange procedure (see request for comments (RFC) 8110), or by the SAE authentication procedure, or by the FILS authentication procedure; or the PMKSA is generated based on pre-shared key information. The STA and AP maintain the same PMKSA, while different STAs and APs maintain different PMKSAs. The PMKSA generated this time can be cached for future use. For more details, reference may be made to IEEE 80211-2020 and IEEE 80211az_D5.0.

The PMKSA generally includes: a PMK ID for identifying the security context, MAC (medium access control) addresses of the device requesting authentication (usually the non-AP or non-AP MLD (multi-link device)) and the device providing authentication (usually the AP or AP MLD), a PMK, lifetime, and an AKMP identifier.

The PMKSA may further include authorization parameters (such as an SSID to which access is authorized) and an identifier of the cache where the PMKSA resides.

### VI: Pairwise transient key security association (PTKSA)

A PTKSA mainly includes a pairwise transient key (PTK) derived from the pairwise master key (PMK) and a plurality of subkeys generated from the PTK. For example, the subkeys include an EAPOL-key key confirmation key (KCK), an EAPOL-key key encryption key (KEK), a temporal key (TK), and a key derivation key (KDK). The TK is used for encrypting and decrypting protected unicast data frames and management frames, and the KDK is used for deriving more keys. The PTKSA is generally established through the 4-way handshake process, or through the fast BSS transition 4-way handshake (FT 4-way handshake) process, or through the fast BSS transition authentication (FT authentication sequence) process, or through the FILS authentication process, or through the PASN procedure. For more details, reference may be made to to IEEE 80211-2020 and IEEE 80211az_D5.0.

The PTKSA generally includes: a PTK, a pairwise cipher suite selector for identifying the algorithm being used, a key ID for identifying the key, and MAC addresses of the device requesting authentication (usually the non-AP or non-AP MLD) and the device providing authentication (usually the AP or AP MLD). The PTKSA may further include an R1KH-ID (the MAC address of the authenticator) for fast BSS transition authentication, an S1KH-ID (the MAC address of the supplicant) for fast BSS transition authentication, a PTKName for fast BSS transition authentication, and a WTK for the wake-up radio (WUR) function.

### V: Group transient key secure association (GTKSA)

A GTKSA primarily includes a group transient key (GTK) for encrypting and decrypting protected multicast data frames. The usage of the GTK is generally unidirectional, with the AP encrypting and the STA decrypting. The GTKSA is generally established through the 4-way handshake process, or through the fast BSS transition 4-way handshake (FT 4-way handshake) process, or through the Fast BSS Transition Protocol (FT protocol) process, or through the Fast BSS Transition Resource Sequest Protocol (FT resource request protocol) process, or through the group key handshake process, or through the FILS authentication process. For more details, please refer to IEEE 80211-2020.

The GTKSA generally includes: a direction vector indicating whether the GTK is used for encryption by the transmitter or decryption by the receiver, a group cipher suite selector for identifying the algorithm being used, a GTK, a key ID for identifying the key, and a MAC address of the device providing authentication (usually the AP or AP MLD). The GTKSA may further include authorization parameters (such as an SSID to which access is authorized).

### VI: Integrity group temporal key security association (IGTKSA)

An IGTKSA primarily includes an integrity group temporal key (IGTK), which is used to generate a message integrity code (MIC) for multicast management frames. The usage of the IGTK is generally unidirectional, with the AP generating the MIC for multicast management frames and the STA verifying the MIC.

The IGTKSA generally includes: a direction vector indicating whether the IGTK is used for generating the MIC by the transmitter or verifying the MIC by the receiver, an IGTK, a key ID for identifying the key, and a MAC address of the device providing authentication (usually the AP or AP MLD).

### VII: Beacon integrity group temporal key security association (BIGTKSA)

A BIGTKSA primarily includes a Beacon integrity group temporal key (BIGTK), which is used to generate the MIC for Beacon frames. The usage of the BIGTK is generally unidirectional, with the AP generating the MIC for Beacon frames and the STA verifying the MIC.

The BIGTKSA generally includes: a direction vector indicating whether the BIGTK is used for generating the MIC by the transmitter or verifying the MIC by the receiver, a BIGTK, a key ID for identifying the key, and a MAC address of the device providing authentication (usually the AP or AP MLD).

### VIII: Fast initial link setup authentication (FILS authentication)

According to the IEEE 802.11 protocol, in an infrastructure BSS network, an STA and an AP may use the FILS mode for authentication.

In the case of using the shared key authentication mode, the STA and a trusted third party (TTP) generate the same key (re-authentication root key, rRK) in advance through a complete Extensible Authentication Protocol (EAP) authentication. Upon receiving the authentication frame from the STA, the AP acquires the rRK from the TTP. The STA and the AP generate the PMKSA and the PTKSA based on the rRK and the random numbers exchanged between them. The shared key authentication mode is further categorized into two types: shared key authentication without perfect forward security (PFS) and shared key authentication with PFS.

In the case of using the public key authentication mode, the STA and the AP exchange their public keys in the authentication frames and verify the signatures of the public keys. The STA and the AP generate the PMKSA and the PTKSA based on their public keys and the random numbers exchanged between them.

In the case of using the FILS shared key mode, both the STA and the AP interact with the TTP.

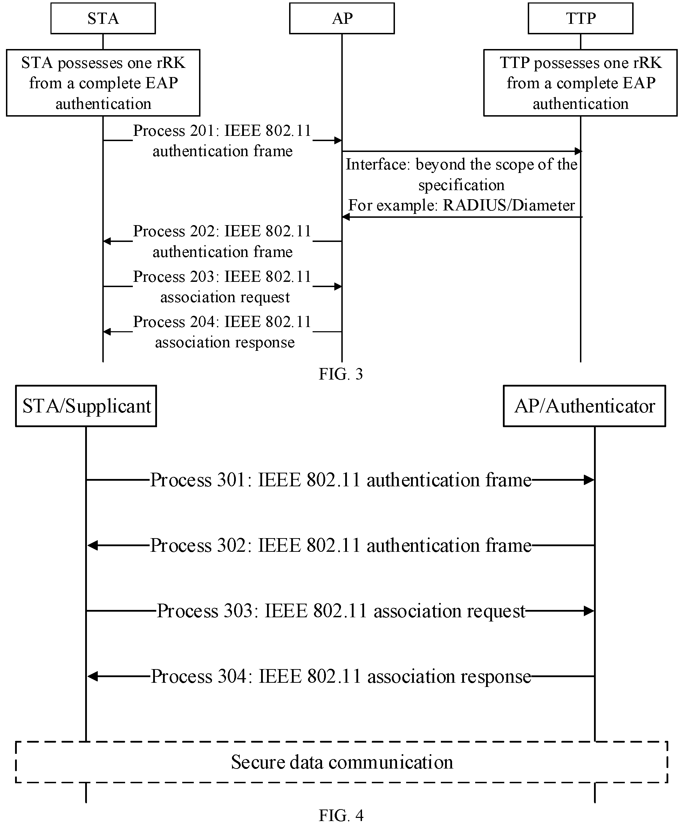

In some embodiments, as illustrated in FIG. 3, the method includes the following processes.

Both the STA and the TTP possess one rRK acquired from a complete EAP authentication.

In process 201, the STA transmits an IEEE 802.11 authentication frame to the AP.

Upon receiving the authentication frame, the AP acquires the rRK from the TTP over an interface beyond the scope of the specification. For example, the interface may be a RADIUS/Diameter interface.

In process 202, the AP transmits an IEEE 802.11 authentication frame to the STA.

In process 203, the STA transmits an IEEE 802.11 association request to the AP.

In process 204, the AP transmits an IEEE 802.11 association response to the STA.

In the case of using the FILS public key mode, the STA and the AP do not interact with the TTP, as illustrated in FIG. 4. The method includes the following processes.

In process 301, the STA transmits an IEEE 802.11 authentication frame to the AP.

In process 302, the AP transmits an IEEE 802.11 authentication frame to the STA.

In process 303, the STA transmits an IEEE 802.11 association request to the AP.

In process 304, the AP transmits an IEEE 802.11 association response to the STA.

The AP and the STA perform secure data communication.

### IX: FILS shared key without perfect forward security (PFS)

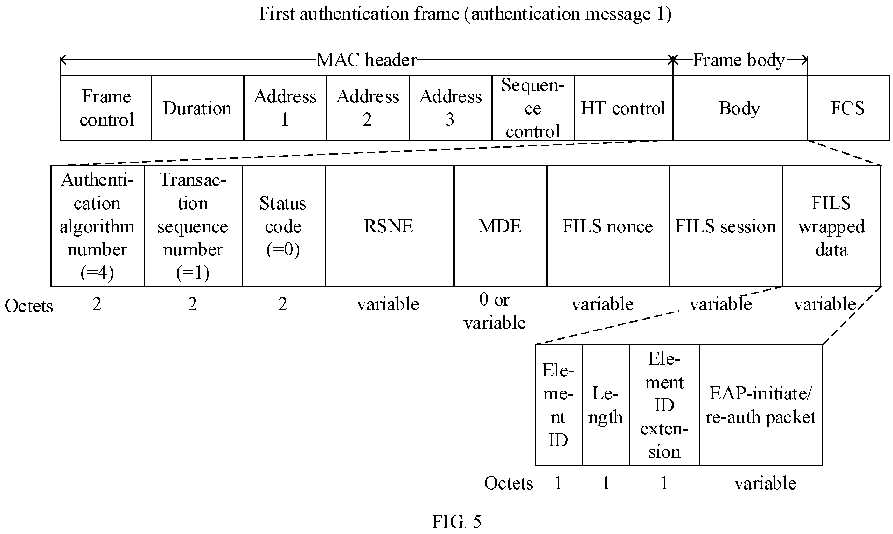

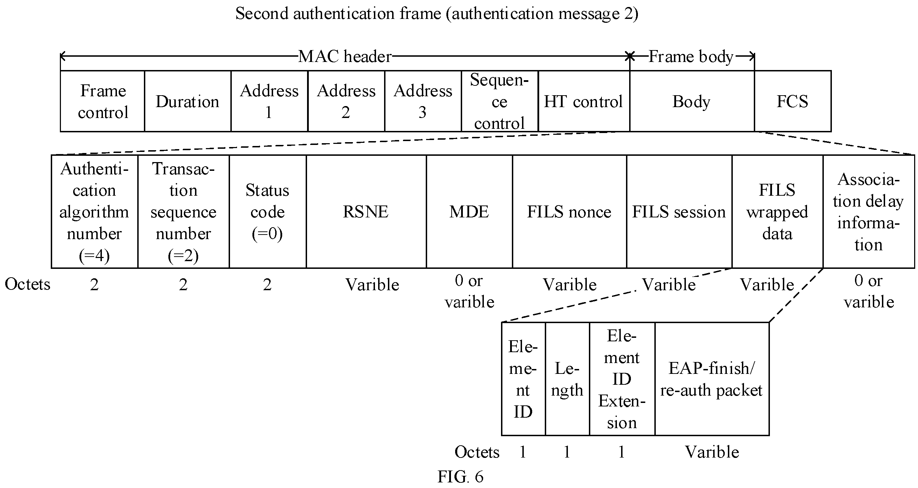

In the case of using the FILS shared key without PFS authentication mode, the authentication frame in process 201 of FIG. 3 is illustrated in FIG. 5, and the authentication frame in process 202 of FIG. 3 is illustrated in FIG. 6.

In some embodiments, as illustrated in FIG. 5, the MAC header of the authentication frame in process 201 includes the following fields: frame control, duration, address 1, address 2, address 3, sequence control, and HT (high-throughput) control.

The frame body of the authentication frame includes a body field.

The authentication frame further includes an FCS (frame check sequence) field.

The body field includes the following fields: authentication algorithm number = 4, transaction sequence number = 1, status code = 0, RSNE, MDE (mobility domain element), FILS nonce, FILS session, and FILS wrapped data. The authentication algorithm number = 4 indicates the FILS shared key without PFS.

The FILS wrapped data field includes: element ID, length, element ID extension, and EAP-initiate/re-auth packet.

In some embodiments, as illustrated in FIG. 6, the MAC header of the authentication frame in process 202 includes the following fields: frame control, duration, address 1, address 2, address 3, sequence control, and HT control.

The frame body of the authentication frame includes a body field.

The authentication frame further includes an FCS field.

The body field includes the following fields: authentication algorithm number = 4, transaction sequence number = 2, status code = 0, RSNE, MDE, FILS nonce, FILS session, FILS wrapped data, and association delay information.

The FILS wrapped data field includes: element ID, length, element ID extension, and EAP-finish/re-auth packet.

The formats of the EAP-initiate/re-auth and EAP-finish/re-auth messages are specified by the RFC 6696 protocol.

In this case, the method for generating the PMK is as follows.
rMSK = KDF (rRK, "re-authentication master session key@ietf.org" ∥ "\0" ∥ SEQ ∥ length)
PMK = HMAC-Hash (SNonce ∥ ANonce, rMSK)
PMK ID = Truncate-128 (Hash (EAP-initiate/reauth)).

The rMSK represents the re-authentication master session key; the SNonce represents the random number generated by the STA, and the ANonce represents the random number generated by the AP.

In this case, the method for generating FILS-Key-Data (equivalent to PTK) is as follows.
FILS-Key-Data = PRF-X (PMK, "FILS PTK derivation", SPA ∥ AA ∥ SNonce ∥ ANonce)
ICK = L (FILS-Key-Data, 0, ICK_bits)
KEK = L (FILS-Key-Data, ICK_bits, KEK_bits)
TK = L (FILS-Key-Data, ICK_bits + KEK_bits, TK_bits)
FILS-FT = L (FILS-Key-Data, ICK_bits + KEK_bits + TK_bits, FILS-FT_bits)
KDK = L (FILS-Key-Data, ICK_bits + KEK_bits + TK_bits + [ FILS-FT_bits ], KDK_bits).

### X: FILS shared key with perfect forward security (PFS)

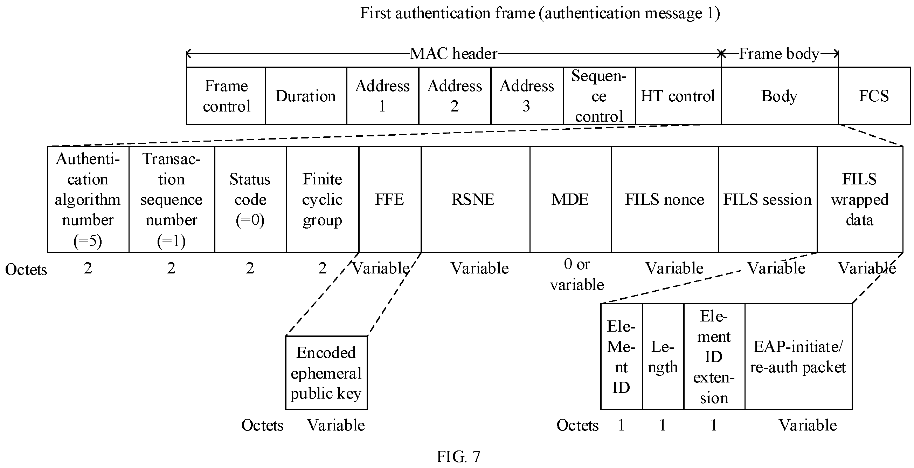

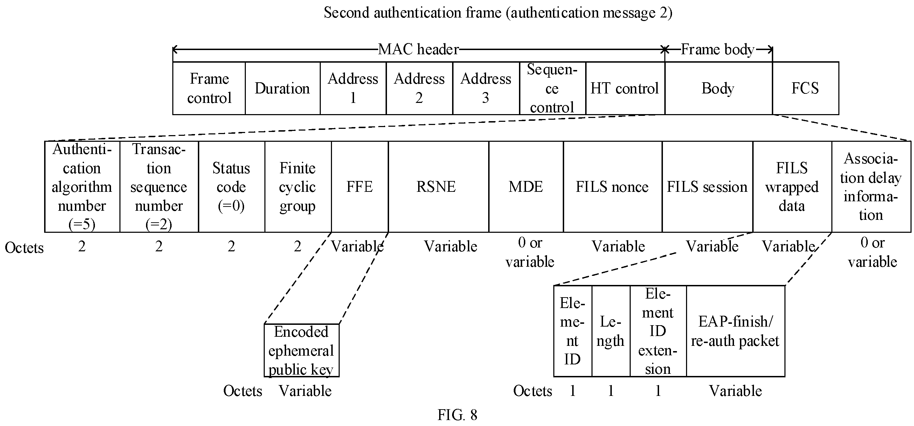

In the case of using the FILS shared key with PFS authentication mode, the authentication frame in process 201 of FIG. 3 is illustrated in FIG. 7, and the authentication frame in process 202 of FIG. 3 is illustrated in FIG. 8.

In some embodiments, as illustrated in FIG. 7, the MAC header of the authentication frame in process 201 includes the following fields: frame control, duration, address 1, address 2, address 3, sequence control, and HT control.

The frame body of the authentication frame includes a body field.

The authentication frame further includes an FCS field.

The body field includes the following fields: authentication algorithm number = 5, transaction sequence number = 1, status code = 0, finite cyclic group, an FFE (finite field element) field, RSNE, MDE, FILS nonce, FILS session, and FILS wrapped data. The authentication algorithm number = 5 indicates the FILS shared key with PFS.

The FFE field includes an encoded ephemeral public key field.

The FILS wrapped data field includes: element ID, length, element ID extension, and EAP-initiate/re-auth packet.

It should be noted that the "element" in FFE refers to an element in a finite field (a mathematical concept), not an element in an 802.11 frame. In an 802.11 frame (such as an authentication frame), a "field" generally refers to a fixed-format field, and an element refers to a field of variable length and format with an element ID + length.

In some embodiments, as illustrated in FIG. 8, the MAC header of the authentication frame in process 202 includes the following fields: frame control, duration, address 1, address 2, address 3, sequence control, and HT control.

The frame body of the authentication frame includes a body field.

The authentication frame further includes an FCS field.

The body field includes the following fields: authentication algorithm number = 5, transaction sequence number = 2, status code = 0, finite cyclic group, an FFE field, RSNE, MDE, FILS nonce, FILS session, FILS wrapped data, and association delay information.

The FFE field includes an encoded ephemeral public key field.

The FILS wrapped data field includes: element ID, length, element ID extension, and EAP-finish/re-auth packet.

In this case, the method for generating the PMK is as follows.
rMSK = KDF (rRK, "re-authentication master session key@ietf.org" ∥ "\0" ∥ SEQ ∥ length)
PMK = HMAC-Hash (SNonce ∥ ANonce, rMSK ∥ DHss)
PMKID = Truncate-128 (Hash (EAP-initiate/reauth)).

The DHss represents the shared key generated by the Diffie-Hellman key exchange process.

In this case, the method for generating FILS-Key-Data (equivalent to PTK) is as follows.
FILS-Key-Data = PRF-X (PMK, "FILS PTK derivation", SPA ∥ AA ∥ SNonce ∥ ANonce ∥ DHss )
ICK = L (FILS-Key-Data, 0, ICK_bits)
KEK = L (FILS-Key-Data, ICK_bits, KEK_bits)
TK = L (FILS-Key-Data, ICK_bits + KEK bits, TK_bits)
FILS-FT = L (FILS-Key-Data, ICK_bits + KEK_bits + TK_bits, FILS-FT_bits)
KDK = L (FILS-Key-Data, ICK_bits + KEK_bits + TK_bits + [ FILS-FT_bits ], KDK_bits).

### XI: FILS public key

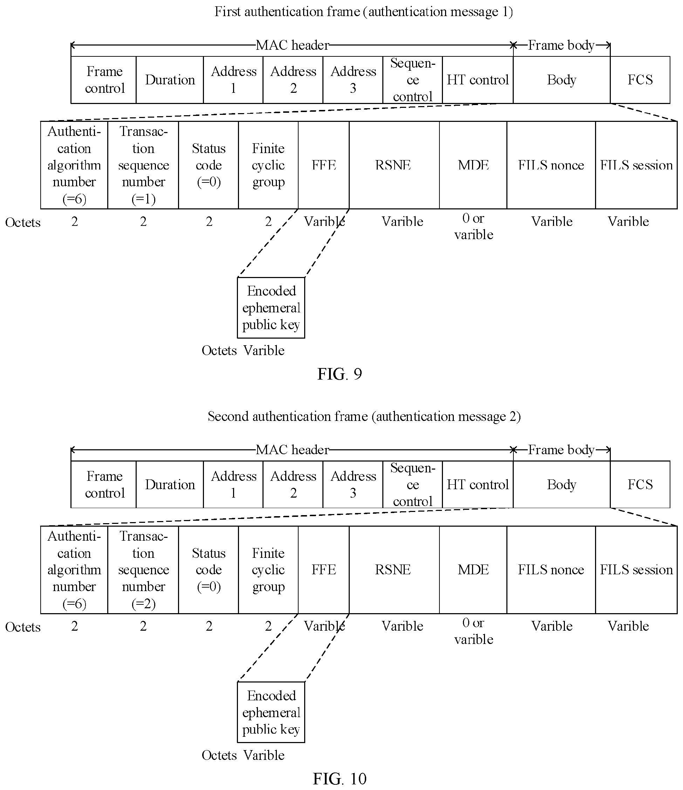

In the case of using the FILS public key authentication mode, the authentication frame in process 301 of FIG. 4 is illustrated in FIG. 9, and the authentication frame in process 302 of FIG. 4 is illustrated in FIG. 10.

In some embodiments, as illustrated in FIG. 9, the MAC header of the authentication frame in process 301 includes the following fields: frame control, duration, address 1, address 2, address 3, sequence control, and HT control.

The frame body of the authentication frame includes a body field.

The authentication frame further includes an FCS field.

The body field includes the following fields: authentication algorithm number = 6, transaction sequence number = 1, status code = 0, finite cyclic group, an FFE field, RSNE, MDE, FILS nonce, and FILS session. The authentication algorithm number = 6 indicates the FILS public key.

The FFE field includes an encoded ephemeral public key field.

In some embodiments, as illustrated in FIG. 10, the MAC header of the authentication frame in process 302 includes the following fields: frame control, duration, address 1, address 2, address 3, sequence control, and HT control.

The frame body of the authentication frame includes a body field.

The authentication frame further includes an FCS field.

The body field includes the following fields: authentication algorithm number = 6, transaction sequence number = 2, status code = 0, finite cyclic group, an FFE field, RSNE, MDE, FILS nonce, and FILS session.

The FFE field includes an encoded ephemeral public key field.

In this case, the method for generating the PMK is as follows.
PMK = HMAC-Hash (SNonce ∥ ANonce, DHss)
PMKID = Truncate-128 (Hash (gSTA ∥ gAP)).

The gSTA represents the Diffie-Hellman value for the STA; the gAP represents the Diffie-Hellman value for the AP; the DHss represents the shared key generated by the Diffie-Hellman key exchange process.

In this case, the method for generating FILS-Key-Data (equivalent to PTK) is as follows.
FILS-Key-Data = PRF-X (PMK, "FILS PTK derivation", SPA ∥ AA ∥ SNonce ∥ ANonce ∥ DHss)
ICK = L (FILS-Key-Data, 0, ICK_bits)
KEK = L (FILS-Key-Data, ICK_bits, KEK_bits)
TK = L (FILS-Key-Data, ICK_bits + KEK bits, TK_bits)
FILS-FT = L (FILS-Key-Data, ICK_bits + KEK_bits + TK_bits, FILS-FT_bits)
KDK = L (FILS-Key-Data, ICK_bits + KEK_bits + TK_bits + [ FILS-FT_bits ], KDK_bits).

### XII: 802.1X authentication

According to the IEEE 802.11 protocol, in an infrastructure BSS network, an STA and an AP may use the 802.1X authentication mode for authentication. The STA and an 802.1X authentication server (AS) generate the same PMK using an EAP authentication. During the authentication process, the AS transmits the generated PMK to the AP through other protocols.

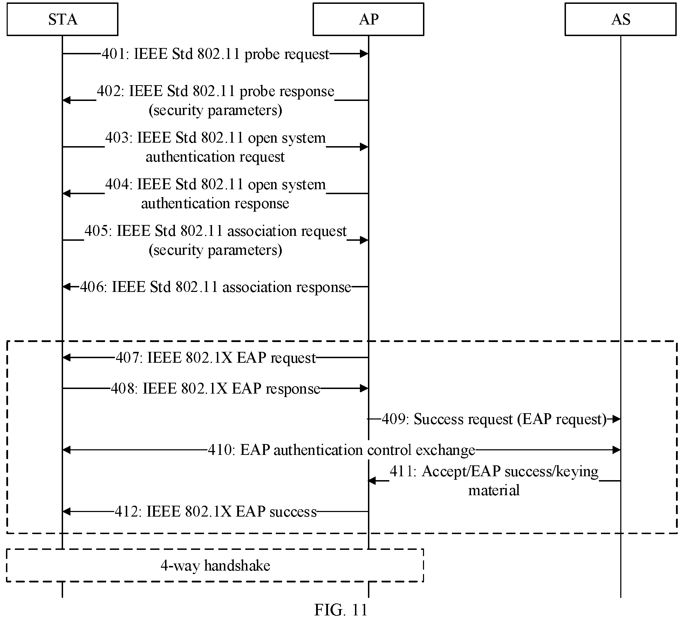

In some embodiments, as illustrated in FIG. 11, performing authentication using an 802.1X authentication process includes the following processes.

In process 401, the STA transmits an IEEE Std 802.11 probe request to the AP.

In process 402, the AP transmits an IEEE Std 802.11 probe response to the STA. The probe response carries security parameters.

In process 403, the STA transmits an IEEE Std 802.11 open system authentication request to the AP.

In process 404, the AP transmits an IEEE Std 802.11 open system authentication response to the STA.

In process 405, the STA transmits an IEEE Std 802.11 association request to the AP, the association request carrying security parameters.

In process 406, the AP transmits an IEEE Std 802.11 association response to the STA.

In process 407, the AP transmits an IEEE Std 802.11 EAP request to the STA.

In process 408, the STA transmits an IEEE Std 802.11 EAP response to the AP.

In process 409, the AP transmits a success request/EAP request to the AS.

In process 410, the AS and the STA perform an EAP authentication control exchange.

In process 411, the AS transmits an accept/EAP success/key material message to the AP.

In process 412, the AP transmits an IEEE Std 802.11 EAP success to the STA.

The STA and the AP perform a 4-way handshake process.

The EAP request/EAP response/EAP success message formats are specified by the 802.1X-2020 protocol and RFC 3748 protocol, and they are carried within the frame body of the IEEE 802.11 data frame for transmission.

In some embodiments, before the AP transmits the EAP request message to the STA, the STA transmits an EAPOL-start message to the AP. The EAPOL-start message format is specified by the 802.1X-2020 protocol, and the EAPOL-start message is carried within the frame body of the IEEE 802.11 data frame for transmission. The EAPOL-start message includes a protocol version field, a packet type (set to EAPOL-start) field, and a packet body length field.

In the case that the value of the protocol version field is less than or equal to 2, the message body length of the message is 0.

In the case that the value of the protocol version field is greater than or equal to 3, the message body of the message contains authentication information related to authorization and authentication policies.

### XIII: 4-way handshake

According to the IEEE 802.11 protocol, in an infrastructure BSS network, after an STA establishes an association with an AP, the AP (i.e., the authenticator) establishes a PTKSA, a GTKSA, an IGTKSA, and a BIGTKSA by initiating a 4-way handshake process with the STA (i.e., the supplicant). For more details, please refer to IEEE 80211-2020.

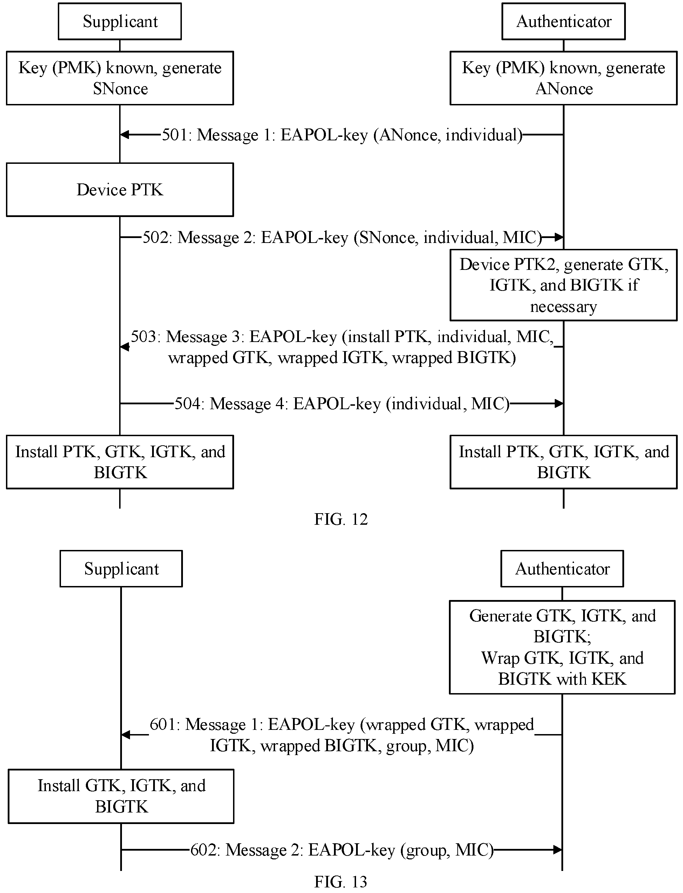

In some embodiments, as illustrated in FIG. 12, the 4-way handshake process includes the following processes.

After the supplicant and the authenticator establish an association, both the supplicant and the authenticator possess a PMK. The supplicant generates an SNonce, and the authenticator generates an ANonce.

In process 501, the authenticator transmits message 1 to the supplicant.

The authenticator transmits an EAPOL-key frame carrying the ANonce and an individual to the supplicant.

The supplicant generates a device PTK, which is also referred to deriving PTK.

In process 502, the supplicant transmits message 2 to the authenticator.

The supplicant transmits an EAPOL-key frame carrying the SNonce, an individual, and an MIC to the authenticator.

The authenticator generates a device PTK, which is also referred to deriving PTK. If necessary, the authenticator generates the GTK, IGTK, and BIGTK.

In process 503, the authenticator transmits message 3 to the supplicant.

The authenticator transmits an EAPOL-key frame carrying an install PTK, an individual, an MIC, a wrapped GTK, a wrapped IGTK, and a wrapped BIGTK to the supplicant.

In process 504, the supplicant transmits message 4 to the authenticator.

The supplicant transmits an EAPOL-key frame carrying an individual and an MIC to the authenticator.

The supplicant and the authenticator each install the PTK, GTK, IGTK, and BIGTK.

### XIV: Group key handshake

According to the IEEE 802.11 protocol, in an infrastructure BSS network, after an STA establishes an association with an AP, in the case that the GTKSA and/or the IGTKSA and/or the BIGTKSA need to be changed, the AP (i.e., the authenticator) establishes a new GTKSA and/or an IGTKSA and/or a BIGTKSA by initiating a group key handshake process with the STA (i.e., the supplicant). For more details, please refer to IEEE 80211-2020.

In some embodiments, as illustrated in FIG. 13, the group key handshake process includes the following processes.

The authenticator generates the GTK, IGTK, or BIGTK, and wraps the GTK, IGTK, or BIGTK using the KEK.

In process 601, the authenticator transmits message 1 to the supplicant.

The authenticator transmits an EAPOL-key frame carrying a wrapped GTK, a wrapped IGTK, a wrapped BIGTK, and an MIC to the supplicant.

The supplicant installs the GTK, IGTK, and BIGTK.

In process 602, the supplicant transmits message 2 to the authenticator.

The supplicant transmits an EAPOL-key frame carrying a group and an MIC to the authenticator.

### XV: Simultaneous authentication of equals (SAE) authentication

According to the IEEE 802.11 protocol, in an infrastructure BSS network, a TA and an AP may use the SAE process for authentication. In the process, the device requesting authentication (usually the non-AP or non-AP MLD) and the device providing authentication (usually the AP or AP MLD) possess the same network key (password). Authentication is completed through the exchange of four authentication messages, and a PMKSA is generated based on the password.

In the SAE authentication mode, the PTK for encrypting and decrypting a unicast data frame and a management frame is generally generated only after the 4-way handshake, which means frames before the 4-way handshake cannot be protected.

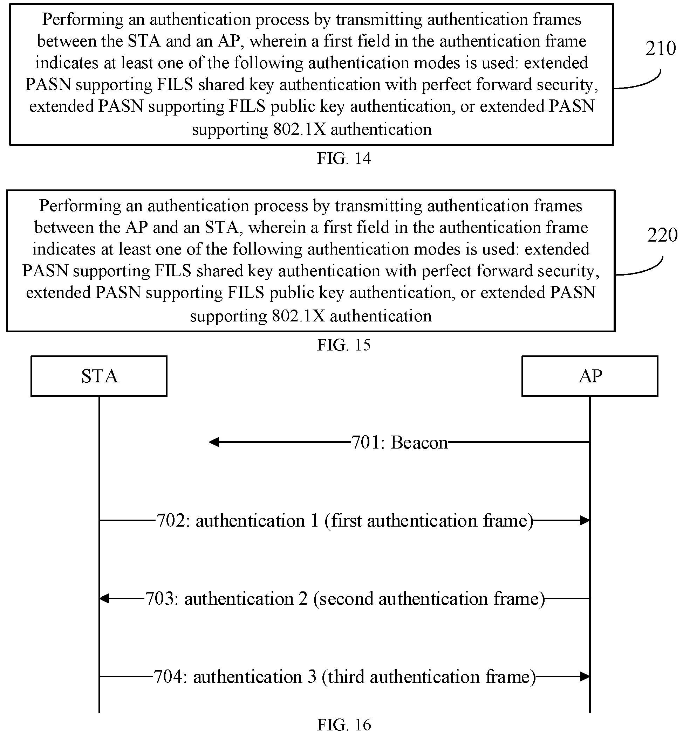

FIG. 14 is a flowchart of a method for authentication according to some embodiments of the present disclosure. The method is applicable to an STA, and the method includes the following processes.

**In process 210,** the STA performs an authentication process by transmitting authentication frames between the STA and an AP, wherein a first field in the authentication frame indicates that at least one of the following authentication modes is used: extended PASN supporting FILS shared key authentication with perfect forward security, extended PASN supporting FILS public key authentication, or extended PASN supporting 802.1X authentication.

The authentication frames are the message transmitted between the STA and the AP during the authentication process. For example, the authentication frames include at least one of a first authentication frame, a second authentication frame, a third authentication frame, or a fourth authentication frame.

In some embodiments, the first field is present in at least one of the first authentication frame, the second authentication frame, the third authentication frame, or the fourth authentication frame. In some embodiments, the first field is present in the first authentication frame and the second authentication frame. In some embodiments, the first field is present in the first authentication frame, the second authentication frame, the third authentication frame, and the fourth authentication frame.

In some embodiments, the authentication process includes a total of three authentication frames. For example, upon detecting a Beacon frame transmitted by an accessible AP, the STA transmits the first authentication frame to the AP; subsequently, the AP transmits the second authentication frame to the STA; and the STA transmits the third authentication frame to the AP, completing the authentication process.

In some embodiments, the authentication process includes a total of four authentication frames. For another example, upon detecting a Beacon frame transmitted by an accessible AP, the STA transmits the first authentication frame to the AP; subsequently, the AP transmits the second authentication frame to the STA; the STA transmits the third authentication frame to the AP; and the AP transmits the fourth authentication frame to the STA, completing the authentication process.

In some embodiments, the extended PASN supporting FILS shared key authentication with perfect forward security and the extended PASN supporting FILS public key authentication have three authentication frames.

In some embodiments, the extended PASN supporting 802.1X authentication has four authentication frames.

The different values of the first field correspond to the extended PASN supporting FILS shared key authentication with perfect forward security, the extended PASN supporting FILS public key authentication, and the extended PASN supporting 802.1X authentication.

By reading the value of the first field, the AP or the STA knows which authentication mode is being used in the authentication process: whether the authentication mode being used is the extended PASN supporting FILS shared key authentication with perfect forward security, the extended PASN supporting FILS public key authentication, or the extended PASN supporting 802.1X authentication. In this way, the AP and the STA can use one of the three authentication modes to perform the authentication process and complete the identity authentication of the STA.

In summary, in the method according to the embodiments, values are added to the first field in the authentication frame, such that the first field can indicate that the extended PASN supporting FILS shared key authentication with perfect forward security (FILS shared key with PFS), the extended PASN supporting FILS public key authentication, or the extended PASN supporting 802.1X authentication is used for authentication. This clarifies how to extend the PASN to support the message format of the authentication modes described above.

FIG. 15 is a flowchart of a method for authentication according to some embodiments of the present disclosure. The method is applicable to an AP, and the method includes the following processes.

**In process 220,** the AP performs an authentication process by transmitting authentication frames between the AP and an STA, wherein a first field in the authentication frame indicates that at least one of the following authentication modes is used: extended PASN supporting FILS shared key authentication with perfect forward security, extended PASN supporting FILS public key authentication, or extended PASN supporting 802.1X authentication.

In some embodiments, the first field includes the authentication algorithm number field and the wrapped data format field in the authentication frame.

The authentication algorithm number field indicates the PASN or the extended PASN. The wrapped data format field indicates the specific authentication mode, that is, one of the extended PASN supporting FILS shared key authentication with perfect forward security, the extended PASN supporting FILS public key authentication, or the extended PASN supporting 802.1X authentication.

In summary, in the method according to the embodiments, values are added to the first field in the authentication frame, such that the first field can indicate that the extended PASN supporting FILS shared key authentication with perfect forward security (FILS shared key with PFS), the extended PASN supporting FILS public key authentication, or the extended PASN supporting 802.1X authentication is used for authentication. This clarifies how to extend the PASN to support the message format of the authentication modes described above.

The embodiments of the present disclosure provide three authentication modes.

### 1. Extended PASN supporting FILS shared key authentication with perfect forward security

### 2. Extended PASN supporting FILS public key authentication

### 3. Extended PASN supporting 802.1X authentication

The three authentication modes are described hereinafter.

### 1. Extended PASN supporting FILS shared key authentication with perfect forward security

In some embodiments, two modes for setting the value of the first field are provided, such that the first field can indicate the extended PASN supporting FILS shared key authentication with perfect forward security.

**A first mode for setting a value:** The authentication algorithm number field being assigned a value of 7 and the wrapped data format field being assigned a first newly added value indicate that the extended PASN supporting FILS shared key authentication with perfect forward security is used for authentication.

The first newly added value may be any value in the range of 4 to 255. Values 1 to 3 are already used for the wrapped data format field, and values 4 to 255 are currently reserved for the wrapped data format field. For example, the first newly added value is 4.

In the embodiments, the authentication algorithm number field in the authentication frame takes the value 7 (where 7 represents PASN authentication). The two parties involved in the authentication use the newly added value 4 in the wrapped data format field (values 4 to 255 are currently reserved) to identify that the mode used is the extended PASN supporting FILS shared key authentication with perfect forward security.

In some embodiments, the authentication algorithm number field being assigned the value of 7 indicates the use of the PASN authentication algorithm. The wrapped data format field being assigned the first newly added value indicates that the extended PASN supporting FILS shared key authentication with perfect forward security is used for authentication.

**A second mode for setting a value:** The authentication algorithm number field being assigned a second newly added value and the wrapped data format field being assigned a first newly added value indicate that the extended PASN supporting FILS shared key authentication with perfect forward security is used for authentication.

The second newly added value may be any value in the range of 8 to 65534. Values 1 to 7 are already used for the authentication algorithm number field, and values 8 to 65534 are currently reserved for the authentication algorithm number field. For example, the second newly added value is 8.

In the embodiments, the authentication algorithm number field in the authentication frame may also take the newly added value 8 (where 8 represents extended PASN authentication, i.e., extended PASN, with values 8 to 65534 currently reserved). The two parties involved in the authentication use the newly added value 4 in the wrapped data format field (values 4 to 255 are currently reserved) to identify that the mode used is the extended PASN supporting FILS shared key authentication with perfect forward security.

In some embodiments, the authentication algorithm number field being assigned the second newly added value indicates the use of the extended PASN authentication algorithm. The wrapped data format field being assigned the first newly added value indicates that the extended PASN supporting FILS shared key authentication with perfect forward security is used for authentication.

In some embodiments, a specific process for using the extended PASN supporting FILS shared key authentication with perfect forward security is provided.

FIG. 16 is a flowchart of a method for authentication according to some embodiments of the present disclosure. The method is applicable to an STA and an AP, and the method includes the following processes.

In process 701, the AP periodically transmits Beacon frames.

In process 702, the STA transmits a first authentication frame to the AP.

In process 703, the AP transmits a second authentication frame to the STA.

In some embodiments, upon receiving the second authentication frame, the STA generates a PMK and a PTK.

In process 704, the STA transmits a third authentication frame to the AP.

In some embodiments, upon receiving the third authentication frame, the AP generates a PMK and PTK.

In some embodiments, at least one of a PMK public key field, a PMK public key length field, a PMK finite cyclic group field, or a PMK group and key present field is added to the authentication frame.

### The first authentication frame format:

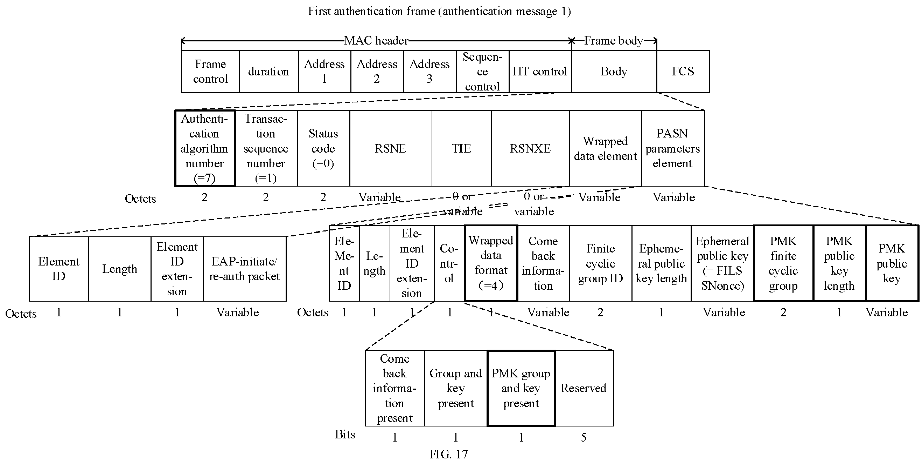

As illustrated in FIG. 17, the MAC header of the first authentication frame includes the following fields: frame control, duration, address 1, address 2, address 3, sequence control, and HT control.

The frame body of the first authentication frame includes a body field.

The first authentication frame further includes an FCS field.

The body field of the first authentication frame includes: authentication algorithm number = 7, transaction sequence number = 1, status code = 0, RSNE, TIE (key lifetime interval), RSNXE, wrapped data element, and PASN parameters element. In some embodiments, the authentication algorithm number is equal to 8.

The wrapped data element field of the first authentication frame includes the following fields: element ID, length, element ID extension, and EAP-initiate/re-auth packet.

The PASN parameters element field of the first authentication frame includes: element ID, length, element ID extension, control, wrapped data format = 4, come back information, finite cyclic group ID, ephemeral public key length, ephemeral public key (= FILS SNonce), PMK finite cyclic group, PMK public key length, and PMK public key.

The control field of the first authentication frame includes: come back information present, group and key present, PMK group and key present, and reserved.

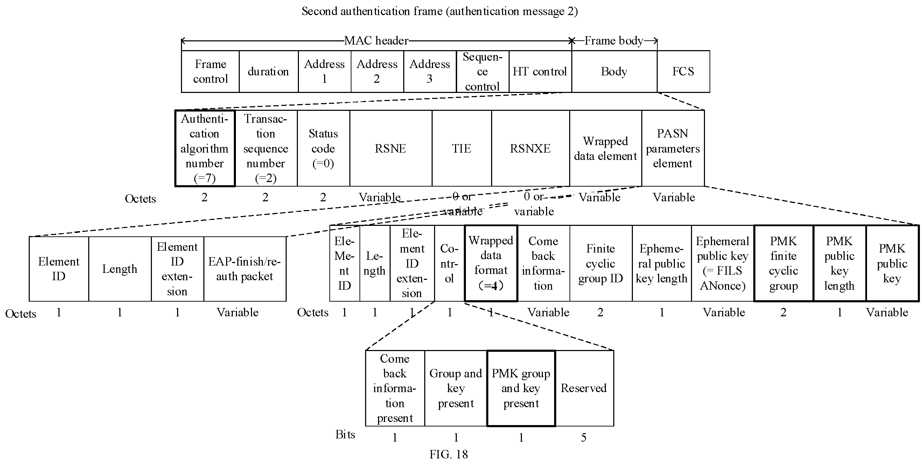

As illustrated in FIG. 18, the MAC header of the second authentication frame includes the following fields: frame control, duration, address 1, address 2, address 3, sequence control, and HT control.

The frame body of the second authentication frame includes a body field.

The second authentication frame further includes an MIC field and an FCS field.

The body field of the second authentication frame includes: authentication algorithm number = 7, transaction sequence number = 2, status code = 0, RSNE, TIE, RSNXE, wrapped data element, and PASN parameters element. In some embodiments, the authentication algorithm number is equal to 8.

The wrapped data element field of the second authentication frame includes the following fields: element ID, length, element ID extension, and EAP-finish/re-auth packet.

The PASN parameters element field of the second authentication frame includes: element ID, length, element ID extension, control, wrapped data format = 4, come back information, finite cyclic group ID, ephemeral public key length, ephemeral public key (= FILS ANonce), PMK finite cyclic group, PMK public key length, and PMK public key.

The control field of the second authentication frame includes: come back information present, group and key present, PMK group and key present, and reserved.

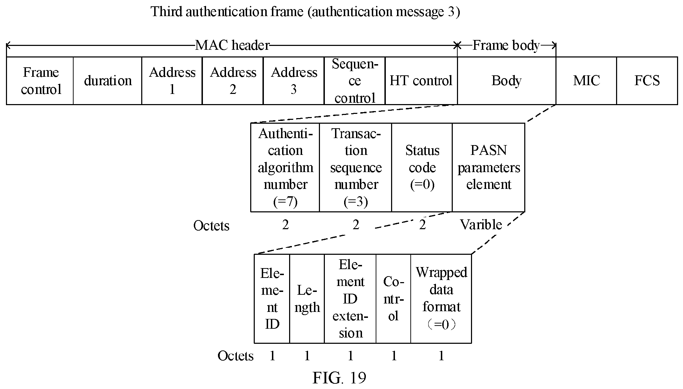

As illustrated in FIG. 19, the MAC header of the third authentication frame includes the following fields: frame control, duration, address 1, address 2, address 3, sequence control, and HT control.

The frame body of the third authentication frame includes a body field.

The third authentication frame further includes an MIC field and an FCS field.

The body field of the third authentication frame includes: authentication algorithm number = 7, transaction sequence number = 3, status code = 0, and PASN parameters element. In some embodiments, the authentication algorithm number is equal to 8.

The PASN parameters eement field of the third authentication frame includes: element ID, length, element ID extension, control, and wrapped data format = 0.

In some embodiments, no new field is added to the authentication frame.

### The second authentication frame format:

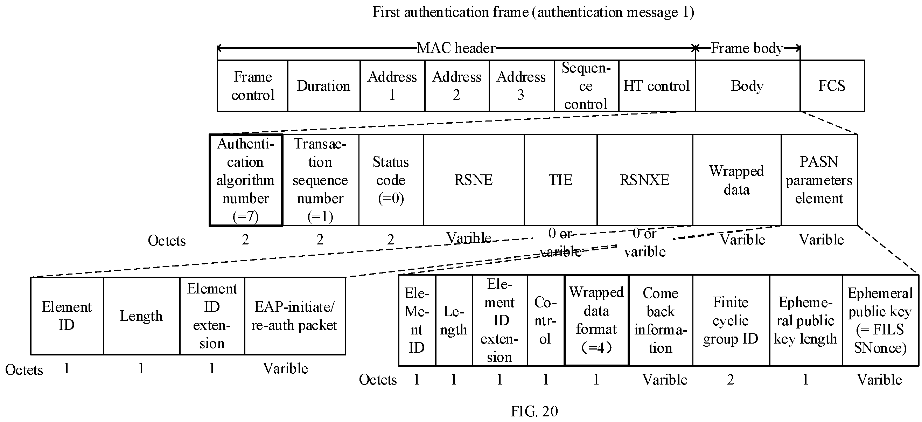

As illustrated in FIG. 20, the MAC header of the first authentication frame includes the following fields: frame control, duration, address 1, address 2, address 3, sequence control, and HT control.

The frame body of the first authentication frame includes a body field.

The first authentication frame further includes an FCS field.

The body field of the first authentication frame includes: authentication algorithm number = 7, transaction sequence number = 1, status code = 0, RSNE, TIE, RSNXE, wrapped data, and PASN parameters element. In some embodiments, the authentication algorithm number is equal to 8.

The wrapped data field of the first authentication frame includes the following fields: element ID, length, element ID extension, and EAP-initiate/re-auth packet.

The PASN parameters element field of the first authentication frame includes: element ID, length, element ID extension, control, wrapped data format = 4, come back information, finite cyclic group ID, ephemeral public key length, and ephemeral public key (= FILS SNonce).

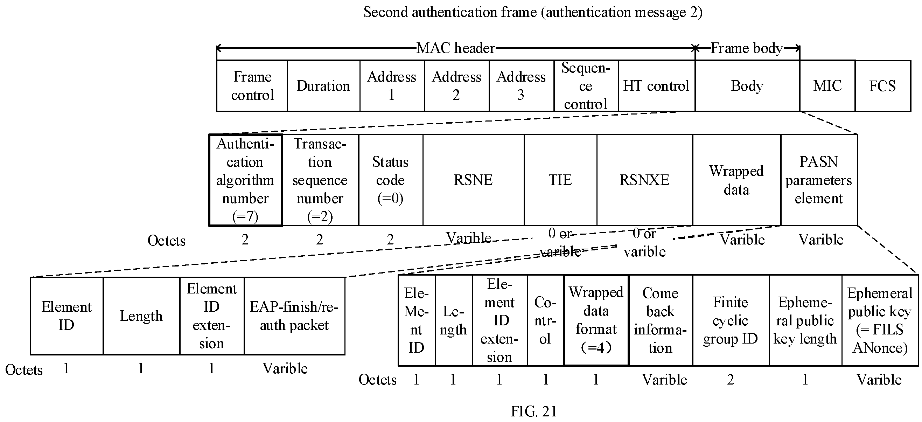

As illustrated in FIG. 21, the MAC header of the second authentication frame includes the following fields: frame control, duration, address 1, address 2, address 3, sequence control, and HT control.

The frame body of the second authentication frame includes a body field.

The second authentication frame further includes an MIC field and an FCS field.

The body field of the second authentication frame includes: authentication algorithm number = 7, transaction sequence number = 2, status code = 0, RSNE, TIE, RSNXE, wrapped data, and PASN parameters element. In some embodiments, the authentication algorithm number is equal to 8.

The wrapped data field of the second authentication frame includes the following fields: element ID, length, element ID extension, and EAP-finish/re-auth packet.

The PASN parameters element field of the second authentication frame includes: element ID, length, element ID extension, control, wrapped data format = 4, come back information, finite cyclic group ID, ephemeral public key length, and ephemeral public key (= FILS ANonce).

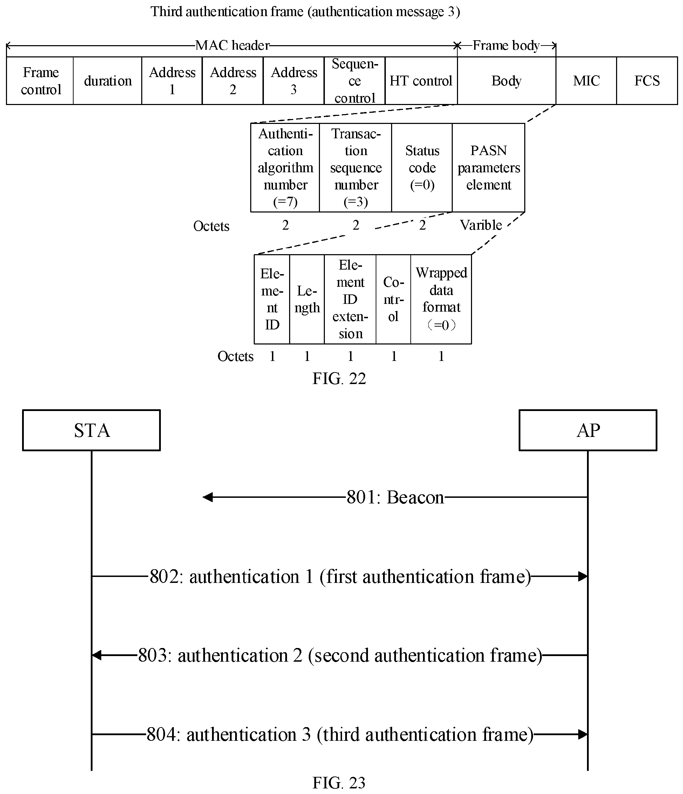

As illustrated in FIG. 22, the MAC header of the third authentication frame includes the following fields: frame control, duration, address 1, address 2, address 3, sequence control, and HT control.

The frame body of the third authentication frame includes a body field.

The third authentication frame further includes an MIC field and an FCS field.

The body field of the third authentication frame includes: authentication algorithm number = 7, transaction sequence number = 3, status code = 0, and PASN parameters element. In some embodiments, the authentication algorithm number is equal to 8.

The PASN parameters element field of the third authentication frame includes: element ID, length, element ID extension, control, and wrapped data format = 0.

It should be noted that the schematic diagrams of the frame formats in the embodiments of the present disclosure are merely used to describe the fields included in the authentication frames and do not limit the arrangement order of the fields in the authentication frames.

**For the first authentication frame format described above, a first mode for generating a PMK and a PTK is provided.**
(1) A PMK is generated.

The AP and/or the STA generate a first PMK based on a first DHss (a shared key). The first DHss is a shared key generated based on the PMK public key of the STA and the PMK public key of the AP.
rMSK = KDF (rRK, "re-authentication master session key@ietf.org" ∥ "\0" ∥ SEQ ∥ length)
PMK = HMAC-Hash (SNonce ∥ ANonce, rMSK ∥ DHss)
PMKID = Truncate-128 (Hash (EAP-initiate/reauth))

The HMAC is a Hash-based message authentication code, the SNonce is a random number generated by the STA, and the ANonce is a random number generated by the AP. The SNonce (or referred to as FILS SNonce) is replaced with the S-ephemeral pub, and the ANonce (or referred to as FILS ANonce) is replaced with the A-ephemeral pub. The DHss is a shared key generated by the Diffie-Hellman (key exchange) process based on the newly added PMK public keys of both parties (the PMK public key fields in FIGS. 17 and 18).

(2) A PTK is generated.

The AP and/or the STA generate a first pairwise transient key (PTK) based on the first PMK and a second DHss. The second DHss is a shared key generated based on the S-ephemeral pub of the STA and the A-ephemeral pub of the AP.
PTK = KDF-HASH-NNN (PMK, "PASN PTK eerivation", SPA ∥ BSSID ∥ DHss)

The DHss is a shared key generated by the Diffie-Hellman process based on the S-ephemeral pub and the A-ephemeral pub. The Diffie-Hellman process is included in the authentication frame interaction process, i.e., the AP and the STA exchange the A-ephemeral pub and the S-ephemeral pub in the authentication frame interaction process.

The S-ephemeral pub and the A-ephemeral pub in the extended PASN of the FILS shared key authentication with perfect forward security are public keys generated by the two parties independently, and the generation mechanism is the same as or similar to that of the PMK public key of the STA and the PMK public key of the AP. In some embodiments, the S-ephemeral pub and the A-ephemeral pub are not signed by a certificate authority (CA).

**For the second authentication frame format described above, a second mode for generating a PMK and a PTK is provided.**
(1) A PMK is generated.

The AP and/or the STA generate a second PMK based on a third DHss.

The third DHss is a shared key generated based on the S-ephemeral pub of the STA and the A-ephemeral pub of the AP.
rMSK = KDF (rRK, "re-authentication master session key@ietf.org" ∥ "\0" ∥ SEQ ∥ length)
PMK = HMAC-Hash (SNonce ∥ ANonce, rMSK ∥ DHss)
PMKID = Truncate-128 (Hash (EAP-initiate/reauth))

The SNonce (or referred to as FILS SNonce) is replaced with the S-ephemeral pub, and the ANonce (or referred to as FILS ANonce) is replaced with the A-ephemeral pub. The DHss is a shared key generated by the Diffie-Hellman process based on the S-ephemeral pub and the A-ephemeral pub.

(2) A PTK is generated.

A second PTK is generated based on the second PMK and the third DHss.
PTK = KDF-HASH-NNN (PMK, "PASN PTK derivation", SPA ∥ BSSID ∥ DHss)

The DHss is a shared key generated by the Diffie-Hellman process based on the S-ephemeral pub and the A-ephemeral pub.

In summary, the method according to the embodiments clarifies how to extend the PASN to support the specific process and message format of the mode for FILS shared key authentication with perfect forward security (FILS shared key with PFS), and provides the mode for generating the PMK and the PTK.

### 2. Extended PASN supporting FILS public key authentication

In some embodiments, two modes for setting the value of the first field are provided, such that the first field can indicate the extended PASN supporting FILS public key authentication.

**The third mode for setting a value:** The authentication algorithm number field being assigned a value of 7 and the wrapped data format field being assigned a third newly added value indicate that the extended PASN supporting FILS public key authentication is used for authentication.

The third newly added value may be any value in the range of 4 to 255. Values 1 to 3 are already used for the wrapped data format field, and values 4 to 255 are currently reserved for the wrapped data format field. For example, the third newly added value is 5.

In the embodiments, the authentication algorithm number field in the authentication frame takes the value 7 (where 7 represents PASN authentication). The two parties involved in the authentication use the newly added value 5 in the wrapped data format field (values 4 to 255 are currently reserved) to identify that the method used is the extended PASN supporting FILS public key authentication.

In some embodiments, the authentication algorithm number field being assigned a value of 7 indicates the use of the PASN authentication algorithm. The wrapped data format field being assigned a third newly added value indicates that the extended PASN supporting FILS public key authentication is used for authentication.

**The fourth mode for setting a value:** The authentication algorithm number field being assigned a fourth newly added value and the wrapped data format field being assigned a third newly added value indicate that the extended PASN supporting FILS public key authentication is used for authentication.

The fourth newly added value may be any value in the range of 8 to 65534. The values 1 to 7 are occupied by the authentication algorithm number field, and the values 8 to 65534 are currently reserved for the authentication algorithm number. For example, the fourth newly added value is 8.

In the embodiments, the authentication algorithm number field in the authentication frame may also take the newly added value 8 (where 8 represents extended PASN authentication, with values 8 to 65534 currently reserved). The two parties involved in the authentication use the newly added value 5 in the wrapped data format field (values 4 to 255 are currently reserved) to identify that the mode used is the extended PASN of FILS public key authentication.

In some embodiments, the authentication algorithm number field being assigned a fourth newly added value indicates the use of the extended PASN authentication algorithm. The wrapped data format field being assigned a third newly added value indicates that the extended PASN supporting FILS public key authentication is used for authentication.

In some embodiments, a specific process for using the extended PASN supporting FILS public key authentication is provided.

FIG. 23 is a flowchart of a method for authentication according to some embodiments of the present disclosure. The method is applicable to an STA and an AP, and the method includes the following processes.

In process 801, the AP periodically transmits Beacon frames.

In process 802, the STA transmits a first authentication frame to the AP.

In process 803, the AP transmits a second authentication frame to the STA.

In some embodiments, upon receiving the second authentication frame, the STA generates a PMK and a PTK.

In process 804, the STA transmits a third authentication frame to the AP.

In some embodiments, upon receiving the third authentication frame, the AP generates a PMK and a PTK.

In some embodiments, at least one of a PMK public key field, a PMK public key length field, a PMK finite cyclic group field, or a PMK group and key present field is added to the authentication frame.

**The third authentication frame format:** At least one of the PMK public key field, the PMK public key length field, or the PMK finite cyclic group field is carried in the wrapped data element field of the authentication frame.

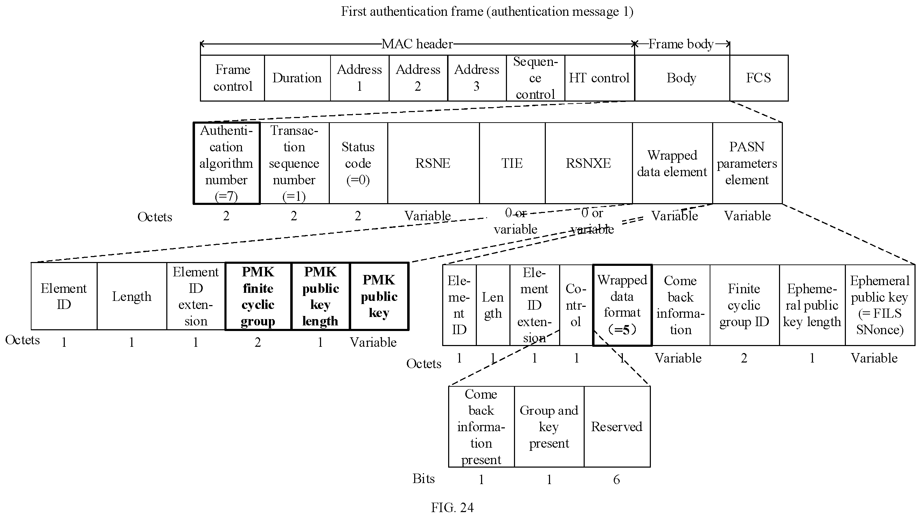

As illustrated in FIG. 24, the MAC header of the first authentication frame includes the following fields: frame control, duration, address 1, address 2, address 3, sequence control, and HT control.

The frame body of the first authentication frame includes a body field.

The first authentication frame further includes an FCS field.

The body field of the first authentication frame includes: authentication algorithm number = 7, transaction sequence number = 1, status code = 0, RSNE, TIE, RSNXE, wrapped data element, and PASN parameters element. In some embodiments, the authentication algorithm number is equal to 8.

The wrapped data element field of the first authentication frame includes the following fields: Element ID, length, Element ID extension, PMK finite cyclic group, PMK public key length, and PMK public key.

The PASN parameters element field of the first authentication frame includes the following fields: element ID, length, element ID extension, control, wrapped data format = 5, come back information, finite cyclic group ID, ephemeral public key length, and ephemeral public key (= FILS SNonce).

The control field of the first authentication frame includes: come back information present, group and key present, and reserved.

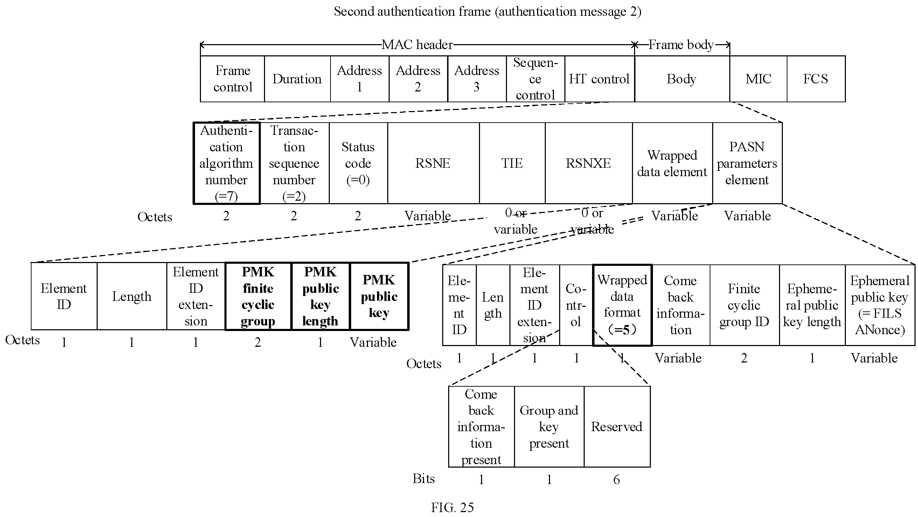

As illustrated in FIG. 25, the MAC header of the second authentication frame includes the following fields: frame control, duration, address 1, address 2, address 3, sequence control, and HT control.

The frame body of the second authentication frame includes a body field.

The second authentication frame further includes an MIC field and an FCS field.

The body field of the second authentication frame includes: authentication algorithm number = 7, transaction sequence number = 2, status code = 0, RSNE, TIE, RSNXE, wrapped data element, and PASN parameters element. In some embodiments, the authentication algorithm number is equal to 8.

The wrapped data element field of the second authentication frame includes the following fields: element ID, length, element ID extension, PMK finite cyclic group, PMK public key length, and PMK public key.

The PASN parameters element field of the second authentication frame includes the following fields: element ID, length, element ID extension, control, wrapped data format = 5, come back information, finite cyclic group ID, ephemeral public key length, and ephemeral public key (= FILS ANonce).

The control field of the second authentication frame includes: come back information present, group and key present, and reserved.

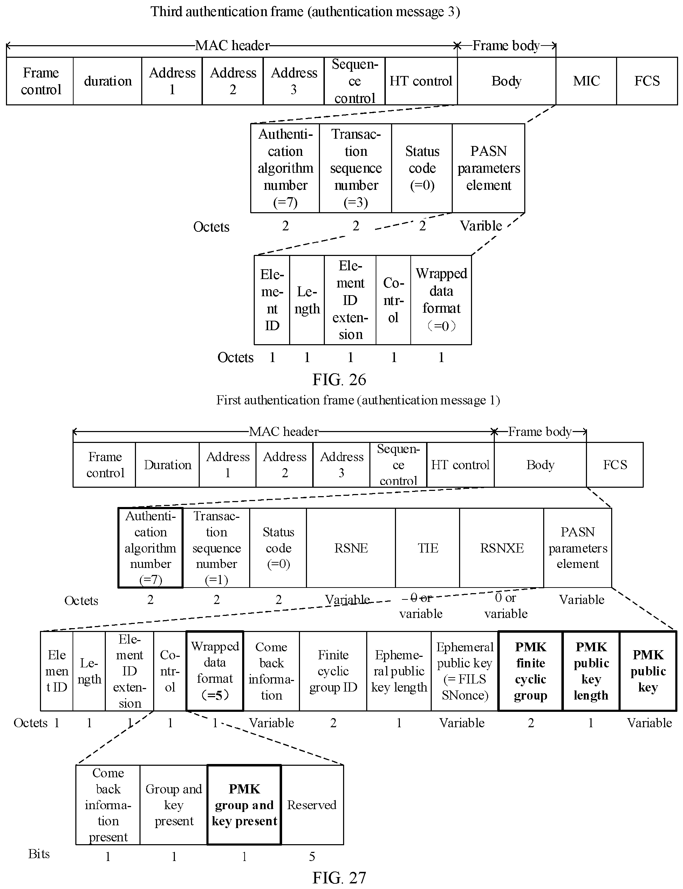

As illustrated in FIG. 26, the MAC header of the third authentication frame includes the following fields: frame control, duration, address 1, address 2, address 3, sequence control, and HT control.

The frame body of the third authentication frame includes a body field.

The third authentication frame further includes an MIC field and an FCS field.

The body field of the third authentication frame includes: authentication algorithm number = 7, transaction sequence number = 3, status code = 0, and PASN parameters element. In some embodiments, the authentication algorithm number is equal to 8.

The PASN parameters element field of the second authentication frame includes: element ID, length, element ID extension, control, and wrapped data format = 0.

**The fourth authentication frame format:** At least one of the PMK public key field, the PMK public key length field, or the PMK finite cyclic group field is carried in the wrapped data element field of the authentication frame; the PMK finite cyclic group field is carried in the control field of the authentication frame.

As illustrated in FIG. 27, the MAC header of the first authentication frame includes the following fields: frame control, duration, address 1, address 2, address 3, sequence control, and HT control.

The frame body of the first authentication frame includes a body field.

The first authentication frame further includes an FCS field.

The body field of the first authentication frame includes: authentication algorithm number = 7, transaction sequence number = 1, status code = 0, RSNE, TIE, RSNXE, and PASN parameters element. In some embodiments, the authentication algorithm number is equal to 8.

The PASN parameters element field of the first authentication frame includes the following fields: element ID, length, element ID extension, control, wrapped data format = 5, come back information, finite cyclic group ID, ephemeral public key length, ephemeral public key (= FILS SNonce), PMK finite cyclic group, PMK public key length, and PMK public key.

The control field of the first authentication frame includes: come back information, group and key present, PMK group and key present, and reserved.

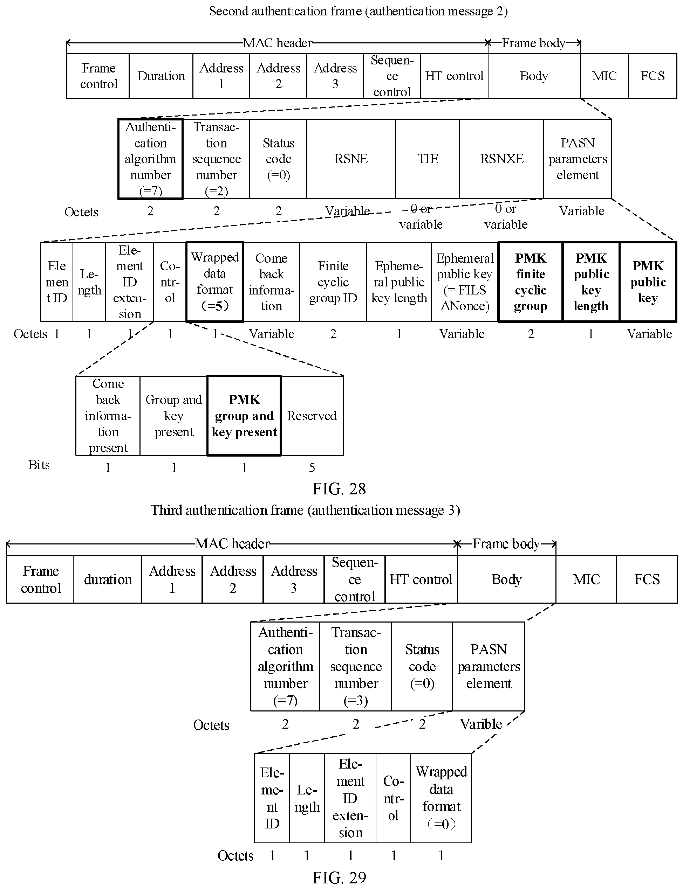

As illustrated in FIG. 28, the MAC header of the second authentication frame includes the following fields: frame control, duration, address 1, address 2, address 3, sequence control, and HT control.

The frame body of the second authentication frame includes a body field.

The second authentication frame further includes an MIC field and an FCS field.

The body field of the second authentication frame includes: authentication algorithm number = 7, transaction sequence number = 2, status code = 0, RSNE, TIE, RSNXE, and PASN parameters element. In some embodiments, the authentication algorithm number is equal to 8.

The PASN parameters element field of the second authentication frame includes the following fields: element ID, length, element ID extension, control, wrapped data format = 5, come back information, finite cyclic group ID, ephemeral public key length, ephemeral public key (= FILS ANonce), PMK finite cyclic group, PMK public key length, and PMK public key.

The control field of the second authentication frame includes: come back information, group and key present, PMK group and key present, and reserved.

As illustrated in FIG. 29, the MAC header of the third authentication frame includes the following fields: frame control, duration, address 1, address 2, address 3, sequence control, and HT control.

The frame body of the third authentication frame includes a body field.

The third authentication frame further includes an MIC field and an FCS field.

The body field of the third authentication frame includes: authentication algorithm number = 7, transaction sequence number = 3, status code = 0, and PASN parameters eElement. In some embodiments, the authentication algorithm number is equal to 8.

The PASN parameters element field of the second authentication frame includes: element ID, length, element ID extension, control, and wrapped data format = 0.

It should be noted that the schematic diagrams of the frame formats in the embodiments of the present disclosure are merely used to describe the fields included in the authentication frames and do not limit the arrangement order of the fields in the authentication frames.

**For the third authentication frame format and the fourth authentication frame format described above, a third mode for generating a PMK and a PTK is provided.**
(1) A PMK is generated.

The AP and/or the STA generate a third PMK based on a fourth DHss. The fourth DHss is a shared key generated based on the PMK public key of the STA and the PMK public key of the AP.
PMK = HMAC-Hash (SNonce ∥ ANonce, DHss)
PMKID = Truncate-128 (Hash (gSTA ∥ gAP))

The gSTA is the Diffie-Hellman (key exchange) value of the STA, and the gAP is the Diffie-Hellman value of the AP. The SNonce (or referred to as FILS SNonce) is replaced with the S-ephemeral pub, and the ANonce (or referred to as FILS ANonce) is replaced with the A-ephemeral pub. The DHss is a shared key generated by the Diffie-Hellman process based on the newly added PMK public keys of both parties (the PMK public key fields in FIGS. 24 and 25 or FIGS 27 and 28).

The S-ephemeral pub and the A-ephemeral pub in the extended PASN supporting FILS public key authentication are preset inside both parties or are acquired in advance by both parties through an out-of-band method. Generally, the public keys here are signed by a CA.

(2) A PTK is generated.

The AP and/or the STA generate a third PTK based on the third PMK and a fifth DHss. The fifth DHss is a shared key generated based on the S-ephemeral pub of the STA and the A-ephemeral pub of the AP.
PTK = KDF-HASH-NNN (PMK, "PASN PTK derivation", SPA ∥ BSSID ∥ DHss)

The DHss is a shared key generated by the Diffie-Hellman process based on the S-ephemeral pub and the A-ephemeral pub.

In summary, the method according to the embodiments clarifies how to extend the PASN to support the specific process and message format of the mode for FILS public key authentication, and provides the mode for generating the PMK and the PTK.

### 3. Extended PASN supporting 802.1X authentication

In some embodiments, two modes for setting a value of the first field are provided, such that the first field can indicate the extended PASN supporting 802.1X authentication.

**The fifth mode for setting a value:** The authentication algorithm number field being assigned a value of 7 and the wrapped data format field being assigned a fifth newly added value indicate that the extended PASN supporting 802.1X authentication is used for authentication.

The fifth newly added value may be any value in the range of 4 to 255. Values 1 to 3 are already used for the wrapped data format field, and values 4 to 255 are currently reserved for the wrapped data format field. For example, the third newly added value is 6.

In the embodiments, the authentication algorithm number field in the authentication frame takes the value 7 (where 7 represents PASN authentication). The two parties involved in the authentication use the newly added value 6 in the wrapped data format field (values 4 to 255 are currently reserved) to identify that the extended PASN of the 802.1X authentication mode is used for authentication.

In some embodiments, the authentication algorithm number field being assigned a value of 7 indicates the use of the PASN authentication algorithm. The wrapped data format field being assigned a fifth newly added value indicates that the extended PASN supporting 802.1X authentication is used for authentication.

**The sixth mode for setting a value:** The authentication algorithm number field being assigned a sixth newly added value and the wrapped data format field being assigned a fifth newly added value indicate that the extended PASN supporting 802.1X authentication is used for authentication.

The sixth newly added value may be any value in the range of 8 to 65534. The values 1 to 7 are occupied by the authentication algorithm number field, and the values 8 to 65534 are currently reserved for the authentication algorithm number. For example, the sixth newly added value is 8.

In the embodiments, the authentication algorithm number field in the authentication frame may also take the newly added value 8 (where 8 represents PASN authentication, with values 8 to 65534 currently reserved). The two parties involved in the authentication use the newly added value 6 in the wrapped data format field (values 4 to 255 are currently reserved) to identify that the extended PASN of the 802.1X authentication mode is used for authentication.

In some embodiments, the authentication algorithm number field being assigned a sixth newly added value indicates the use of the extended PASN authentication algorithm. The wrapped data format field being assigned a fifth newly added value indicates that the extended PASN supporting 802.1X authentication is used for authentication.

In some embodiments, a specific process for using the extended PASN supporting 802.1X authentication is provided.

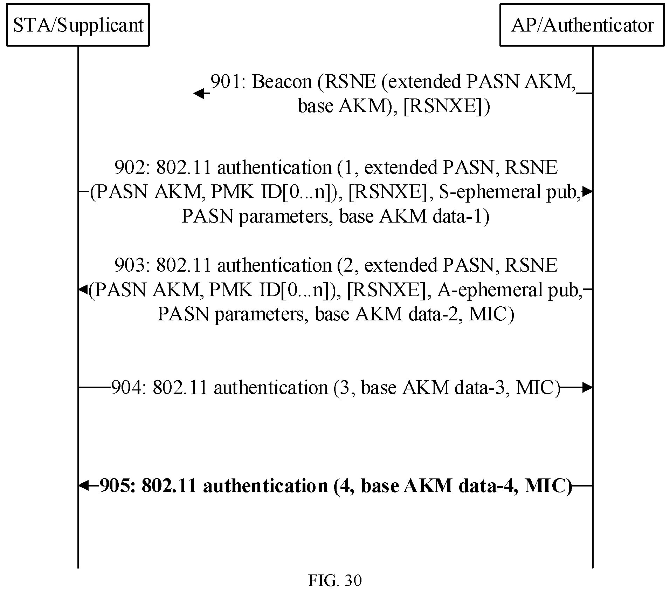

FIG. 30 is a flowchart of a method for authentication according to some embodiments of the present disclosure. The method is applicable to an STA and an AP, and the method includes the following processes.

In process 901, the AP periodically transmits Beacon frames.

The Beacon frame includes fields such as RSNE, extended PASN AKM, base AKM, and RSNXE.

In process 902, the STA transmits a first authentication frame to the AP.

The first authentication frame includes fields such as the transaction sequence number assigned a value of 1 (indicating the authentication 1), extended PASN, RSNE, PASN AKM, PMK ID, RSNXE, S-ephemeral pub (the public key of the supplicant, i.e., the STA's public key), PASN parameters, and base AKM data-1.

In process 903, the AP transmits a second authentication frame to the STA.

The second authentication frame includes fields such as the transaction sequence number assigned a value of 2 (indicating the authentication 2), extended PASN, RSNE, PASN AKM, PMK ID, RSNXE, A-ephemeral pub (the public key of the authenticator, i.e., the AP's public key), PASN parameters, bBase AKM data-2, and MIC.

In some embodiments, upon receiving the second authentication frame, the STA generates a PMK and a PTK.

In process 904, the STA transmits a third authentication frame to the AP.

The third authentication frame includes fields such as the transaction sequence number assigned a value of 3 (indicating the authentication 3), base AKM data-3, and MIC.

In some embodiments, upon receiving the third authentication frame, the AP generates a PMK and a PTK.

In process 905, the AP transmits a fourth authentication frame to the STA.

The fourth authentication frame includes fields such as the transaction sequence number assigned a value of 4 (indicating the authentication 4), base AKM data-4, and MIC.

**The fifth authentication frame format:** The wrapped data format field of the first authentication frame indicates the start of the EAPOL; the wrapped data format field of the second authentication frame indicates an EAP request/identity message; the wrapped data format field of the third authentication frame indicates an EAP response; and the wrapped data format field of the fourth authentication frame indicates the EAP success.

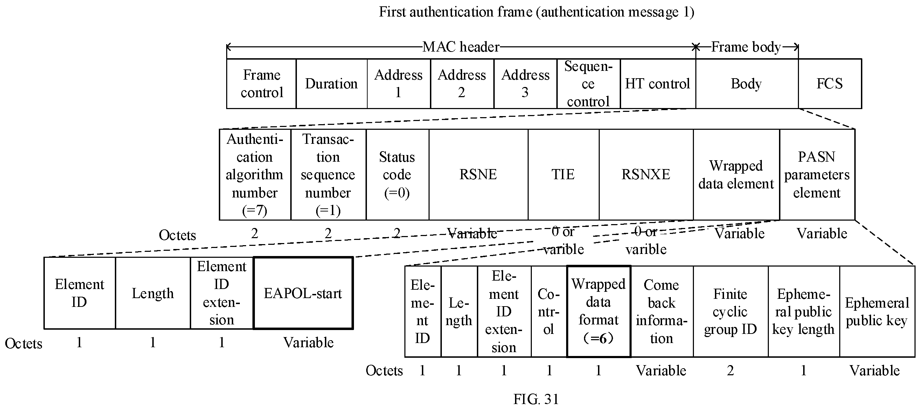

As illustrated in FIG. 31, the MAC header of the first authentication frame includes the following fields: frame control, duration, address 1, address 2, address 3, sequence control, and HT control.

The frame body of the first authentication frame includes a body field.

The first authentication frame further includes an FCS field.

The body field of the first authentication frame includes: authentication algorithm number = 7, transaction sequence number = 1, status code = 0, RSNE, TIE, RSNXE, wrapped data element, and PASN parameters element. In some embodiments, the authentication algorithm number is equal to 8.

The wrapped data element field of the first authentication frame includes: element ID, length, element ID extension, and EAPOL-start.

The PASN parameters element field of the first authentication frame includes the following fields: element ID, length, element ID extension, control, wrapped data format = 6, come back information, finite cyclic group ID, ephemeral public key length, and ephemeral public key.

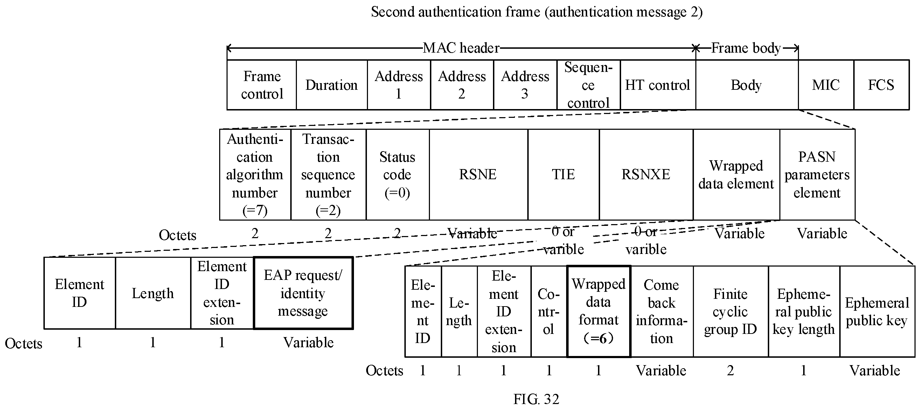

As illustrated in FIG. 32, the MAC header of the second authentication frame includes the following fields: frame control, duration, address 1, address 2, address 3, sequence control, and HT control.

The frame body of the second authentication frame includes a body field.

The second authentication frame further includes an MIC field and an FCS field.

The body field of the second authentication frame includes: authentication algorithm number = 7, transaction sequence number = 2, status code = 0, RSNE, TIE, RSNXE, wrapped data element, and PASN parameters element. In some embodiments, the authentication algorithm number is equal to 8.

The wrapped data element field of the second authentication frame includes the following fields: element ID, length, element ID extension, EAP request/identity message.

The PASN parameters element field of the second authentication frame includes the following fields: element ID, length, element ID extension, control, wrapped data format = 6, come back information, finite cyclic group ID, ephemeral public key length, and ephemeral public key.

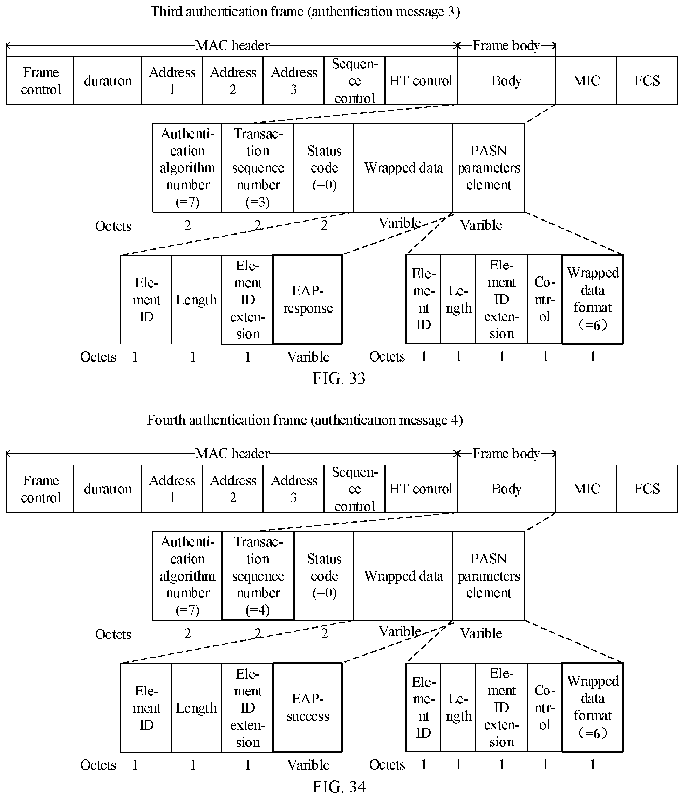

As illustrated in FIG. 33, the MAC header of the third authentication frame includes the following fields: frame control, duration, address 1, address 2, address 3, sequence control, and HT control.

The frame body of the third authentication frame includes a body field.

The third authentication frame further includes an MIC field and an FCS field.

The body field of the third authentication frame includes: authentication algorithm number = 7, transaction sequence number = 3, status code = 0, wrapped data, and PASN parameters element. In some embodiments, the authentication algorithm number is equal to 8.

The wrapped data field of the third authentication frame includes the following fields: element ID, length, element ID extension, and EAP-response.

The PASN parameters element field of the third authentication frame includes the following fields: element ID, length, element ID extension, control, and wrapped data format = 6.

As illustrated in FIG. 34, the MAC header of the fourth authentication frame includes the following fields: frame control, duration, address 1, address 2, address 3, sequence control, and HT control.

The frame body of the fourth authentication frame includes a body field.

The fourth authentication frame further includes an MIC field and an FCS field.

The body field of the fourth authentication frame includes: authentication algorithm number = 7, transaction sequence number = 4, status code = 0, wrapped data, and PASN parameters element. In some embodiments, the authentication algorithm number is equal to 8.

The wrapped data field of the fourth authentication frame includes the following fields: element ID, length, element ID extension, and EAP-success.

The PASN parameters element field of the fourth authentication frame includes the following fields: element ID, length, element ID extension, control, and wrapped data format = 6.

**For the fifth authentication frame format described above, a fourth mode for generating a PMK and a PTK is provided.**
(1) A PMK is generated.

The method for generating a PMK according to the embodiments is consistent with the method for generating a PMK in the 802.1X. The STA and the 802.1X AS generate the same PMK using the EAP authentication. During the authentication process, the AS transmits the generated PMK to the AP through other protocols.

(2) A PTK is generated.
PTK = KDF-HASH-NNN (PMK, "PASN PTK derivation", SPA ∥ BSSID ∥ DHss)

The DHss is a shared key generated by the Diffie-Hellman process based on the S-ephemeral pub and the A-ephemeral pub.

In summary, the method according to the embodiments clarifies how to extend the PASN to support the specific process and message format of the mode for 802.1X authentication, and provides the mode for generating the PMK and the PTK.

The embodiments of the present disclosure further provide an extended PASN method to protect messages during the process of establishing an association between an STA and a network. The messages include association request and response messages, and/or 4-way handshake messages, and/or group key handshake message.

In some embodiments, the PTK generated in the authentication process described above is used to encrypt and decrypt an association process message; and/or, the PTK generated in the authentication process is used to encrypt and decrypt a data communication message.

In some embodiments, the data communication message includes a group key handshake message. The group key handshake message is used to distribute at least one of a GTK, an IGTK, or a BIGTK.

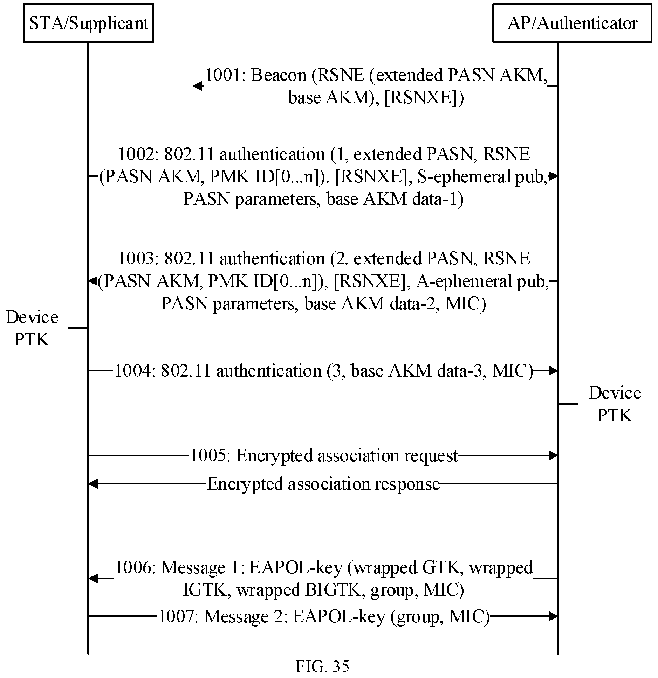

FIG. 35 is a flowchart of a method for authentication according to some embodiments of the present disclosure. The method is applicable to an STA and an AP, and the method includes the following processes.

**In process 1001,** the AP periodically transmits Beacon frames.

The Beacon frame includes fields such as RSNE, extended PASN AKM, base AKM, and RSNXE.

**In process 1002,** the STA transmits a first authentication frame to the AP.

The first authentication frame includes fields such as the transaction sequence number assigned a value of 1 (indicating the authentication 1), extended PASN, RSNE, PASN AKM, PMK ID, RSNXE, S-ephemeral pub (the public key of the supplicant, i.e., the STA's public key), PASN parameters, and base AKM data-1.

**In process 1003,** the AP transmits a second authentication frame to the STA.

The second authentication frame includes fields such as the transaction sequence number assigned a value of 2 (indicating the authentication 2), extended PASN, RSNE, PASN AKM, PMK ID, RSNXE, A-ephemeral pub (the public key of the authenticator, i.e., the AP's public key), PASN parameters, base AKM data-2, and MIC.

In some embodiments, upon receiving the second authentication frame, the STA generates a PMK and a PTK.

**In process 1004,** the STA transmits a third authentication frame to the AP.

The third authentication frame includes fields such as the transaction sequence number assigned a value of 3 (indicating the authentication 3), base AKM data-3, and MIC.

In some embodiments, upon receiving the third authentication frame, the AP generates a PMK and a PTK.

The embodiments only take the authentication process illustrated in processes 1001 to 1004 as an example. Alternatively, the authentication process is replaced with processes 701 to 704 illustrated in FIG. 16, processes 801 to 804 illustrated in FIG. 23, or processes 901 to 905 illustrated in FIG. 30. After replacement, the STA and the AP perform the authentication process using a corresponding extended PASN authentication mode.

**In process 1005,** the STA and the AP encrypt and decrypt messages of the association process using a PTK generated in the authentication process.

The STA encrypts an association request message using the PTK and transmits the encrypted association request message to the AP.

The AP decrypts the association request message using the PTK and encrypts an association response message using the PTK. The AP transmits the encrypted association response message to the STA.

The STA decrypts the association response message using the PTK, completing the association process.

**In process 1006,** the AP encrypts message 1 of a group key handshake process using the PTK generated in the authentication process and transmits the encrypted message 1 to the STA.

The AP encrypts an EAPOL-key frame using the PTK generated in the authentication process. The EAPOL-key frame includes wrapped GTK, wrapped IGTK, wrapped BIGTK, Group, and MIC.

The STA decrypts the message 1 using the PTK generated in the authentication process.

**In process 1007,** the STA encrypts message 2 of the group key handshake process using the PTK generated in the authentication process and transmits the encrypted message 2 to the AP.

The STA encrypts an EAPOL-key frame using the PTK generated in the authentication process. The EAPOL-key frame includes group and MIC.

The AP decrypts the message 2 using the PTK generated in the authentication process.

The method according to the embodiments extends the base AKM used in the PASN, as illustrated in table 1.

**Table 1**

| **Base authentication and key management** | **Process Summary** |
|---|---|
| Using cached PMKSA | PASN based on cached PMKSA, encrypted association request/response frames, group key handshake |
| SAE | PASN based on SAE, encrypted association request/response frames, group key handshake |
| FILS shared key | PASN based on FILS shared key, encrypted association request/response frames, group key handshake |
| FILS public key | PASN based on FILS public/private key, encrypted association request/response frames, group key handshake |
| | Extended PASN, supporting FILS public/private keys through tunneling technology |
| FT | PASN based on FT, encrypted association request/response frames, group key handshake |
| OWE | PASN without authentication, encrypted association request/response frames, group key handshake |
| EAP | PASN based on 802.1X, encrypted association request/response frames, group key handshake |
| | Extended PASN, supporting 802.1X authentication through tunneling technology, i.e., wrapping the EAPOL frame in a wrapped data element |
| PSK | No longer supported, replaced with SAE |

In summary, the method according to the embodiments encrypts and decrypts the association request and response messages using the PTK generated in the extended PASN authentication process. After the association is completed, secure data communication can be carried out, i.e., both the unicast data frame and the management frame can be encrypted and decrypted using the PTK. After the association is completed, GTK, IGTK, and BIGTK are distributed using the group key handshake process. The group key handshake message belongs to the unicast data frame, which can be encrypted and decrypted using the PTK.

In some embodiments, the PTK generated in the authentication process described above is used to encrypt and decrypt the 4-way handshake messages. In addition, an updated PTK is created using the 4-way handshake process. The updated PTK is used to encrypt and decrypt the data communication messages.

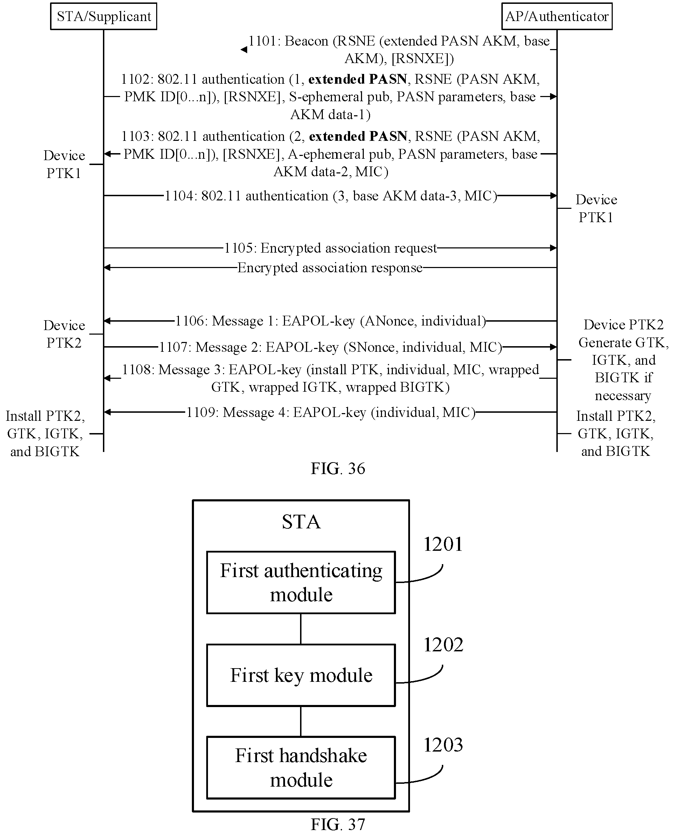

FIG. 36 is a flowchart of a method for authentication according to some embodiments of the present disclosure. The method is applicable to an STA and an AP, and the method includes the following processes.

**In process 1101,** the AP periodically transmits Beacon frames.

The Beacon frame includes fields such as RSNE, extended PASN AKM, base AKM, and RSNXE.

**In process 1102,** the STA transmits a first authentication frame to the AP.

The first authentication frame includes fields such as the transaction sequence number assigned a value of 1 (indicating the authentication 1), extended PASN, RSNE, PASN AKM, PMK ID, RSNXE, S-ephemeral pub (the public key of the supplicant, i.e., the STA's public key), PASN parameters, and base AKM data-1.

**In process 1103,** the AP transmits a second authentication frame to the STA.

The second authentication frame includes fields such as the transaction sequence number assigned a value of 2 (indicating the authentication 2), extended PASN, RSNE, PASN AKM, PMK ID, RSNXE, A-ephemeral pub (the public key of the authenticator, i.e., the AP's public key), PASN parameters, base AKM data-2, and MIC.

In some embodiments, upon receiving the second authentication frame, the STA generates a PMK and a PTK1.

**In process 1104,** the STA transmits a third authentication frame to the AP.

The third authentication frame includes fields such as the transaction sequence number assigned a value of 3 (indicating the authentication 3), base AKM data-3, and MIC.

In some embodiments, upon receiving the third authentication frame, the AP generates a PMK and a PTK1.

The embodiments only take the authentication process illustrated in processes 1101 to 1104 as an example. Alternatively, the authentication process is replaced with processes 701 to 704 illustrated in FIG. 16, processes 801 to 804 illustrated in FIG. 23, or processes 901 to 905 illustrated in FIG. 30. After replacement, the STA and the AP perform the authentication process using a corresponding extended PASN authentication mode.

**In process 1105,** the STA and the AP encrypt and decrypt messages of the association process using a PTK1 generated in the authentication process.

The STA encrypts an association request message using the PTK1 and transmits the encrypted association request message to the AP.

The AP decrypts the association request message using the PTK1 and encrypts an association response message using the PTK1. The AP transmits the encrypted association response message to the STA.

The STA decrypts the association response message using the PTK1, completing the association process.

**In process 1106,** the AP encrypts message 1 of a 4-way handshake process using the PTK1 generated in the authentication process and transmits the encrypted message 1 to the STA.

The AP encrypts an EAPOL-key frame using the PTK1 generated in the authentication process. The EAPOL-key frame includes ANonce and individual.

The STA decrypts the message 1 using the PTK1 generated in the authentication process.

The STA generates a PTK2 based on the ANonce in the message 1 and the SNonce generated by itself.

**In process 1107,** the STA encrypts message 2 of the 4-way handshake process using the PTK1 generated in the authentication process and transmits the encrypted message 2 to the AP.

The STA encrypts an EAPOL-key frame using the PTK1 generated in the authentication process. The EAPOL-key frame includes SNonce, individual, and MIC.

The AP decrypts the message 2 using the PTK1 generated in the authentication process.

The AP generates a PTK2 based on the SNonce in the message 2 and the ANonce generated by itself.

If necessary, the AP generates GTK, IGTK, and BIGTK.

**In process 1108,** the AP encrypts message 3 of the 4-way handshake process using the PTK1 generated in the authentication process and transmits the encrypted message 3 to the STA.

The AP encrypts an EAPOL-key frame using the PTK1 generated in the authentication process. The EAPOL-key frame includes install PTK, individual, MIC, wrapped GTK, wrapped IGTK, and wrapped BIGTK.

The STA decrypts the message 3 using the PTK1 generated in the authentication process.

**In process 1109,** the STA encrypts message 4 of the 4-way handshake process using the PTK1 generated in the authentication process and transmits the encrypted message 4 to the AP.

The STA encrypts an EAPOL-key frame using the PTK1 generated in the authentication process. The EAPOL-key frame includes individual and MIC.

The AP decrypts the message 4 using the PTK1 generated in the authentication process.

The STA and the AP each install PTK2 (replacing PTK1 with PTK2), GTK, IGTK, and BIGTK.

The STA and the AP then encrypt and decrypt data communication messages using the PTK2.

The PTK1 is the PTK generated in the authentication process. The PTK2 is the updated PTK created during the 4-way handshake process.

The method according to the embodiments extends the base AKM used in the PASN, as illustrated in table 2.

**Table 2**

| **Base authentication and Key Management** | **Process Summary** |
|---|---|
| Using cached PMKSA | PASN based on cached PMKSA, encrypted association request/response frames, 4-way handshake |
| SAE | PASN based on SAE, encrypted association request/response frames, 4-way handshake |
| FILS shared Key | PASN based on FILS shared key, encrypted association request/response frames, 4-way handshake |
| FILS public key | PASN based on FILS public/private key, encrypted association request/response frames, 4-way handshake |
| | Extended PASN, supporting FILS public/private keys through tunneling technology |
| FT | PASN based on FT, encrypted association request/response frames, 4-way handshake |
| OWE | PASN without authentication, encrypted association request/response frames, 4-way handshake |
| EAP | PASN based on 802.1X, encrypted association request/response frames, 4-way handshake |
| | Extended PASN, supporting 802.1X authentication through tunneling technology, i.e., wrapping the EAPOL frame in a wrapped data element |
| PSK | No longer supported, replaced with SAE |

In summary, the method according to the embodiments encrypts and decrypts the association request and response messages using the PTK1 generated in the extended PASN authentication process. After the association is completed, a new PTK2 created using the 4-way handshake process is used to replace the PTK1 created by the PASN. The 4-way handshake message is encrypted and decrypted using PTK1. After the 4-way handshake is completed, secure data communication can be carried out, i.e., both the unicast data frame and the management frame can be encrypted and decrypted using the PTK2.

FIG. 37 is a block diagram of an apparatus for authentication according to some embodiments of the present disclosure. The apparatus is configured to be an STA or a part of an STA. The apparatus includes: a first authenticating module 1201.

The first authenticating module 1201 is configured to perform an authentication process by transmitting authentication frames between the STA and an AP, wherein a first field in the authentication frame indicates at least one of the following authentication modes is used: extended PASN supporting FILS shared key authentication with perfect forward security, extended PASN supporting FILS public key authentication, or extended PASN supporting 802.1X authentication.

In some embodiments, the first field includes an authentication algorithm number field and a wrapped data format field.

In some embodiments, the authentication algorithm number field being assigned a value of 7 and the wrapped data format field being assigned a first newly added value indicate that the extended PASN supporting FILS shared key authentication with perfect forward security is used for authentication; or the authentication algorithm number field being a second newly added value and the wrapped data format field being a first newly added value indicate that the extended PASN supporting FILS shared key authentication with perfect forward security is used for authentication.

In some embodiments, the authentication algorithm number field being 7 and the wrapped data format field being a third newly added value indicate that the extended PASN supporting FILS public key authentication is used for authentication; or the authentication algorithm number field being a fourth newly added value and the wrapped data format field being a third newly added value indicate that the extended PASN supporting FILS public key authentication is used for authentication.

In some embodiments, the authentication algorithm number field being 7 and the wrapped data format field being a fifth newly added value indicate that the extended PASN supporting 802.1X authentication is used for authentication; or the authentication algorithm number field being a sixth newly added value and the wrapped data format field being a fifth newly added value indicate that the extended PASN supporting 802.1X authentication is used for authentication.

In some embodiments, the first field indicates that the extended PASN supporting FILS shared key authentication with perfect forward security is used for authentication. The authentication frame further includes at least one of a PMK public key field, a PMK public key length field, a PMK finite cyclic group field, or a PMK group and key present field.

In some embodiments, the authentication frame further includes a PMK public key; the apparatus further includes: a first key module 1202, configured to generate a first PMK based on a first DHss, wherein the first DHss is a shared key generated based on the PMK public key of the STA and the PMK public key of the AP.

In some embodiments, the apparatus further includes: a first key module 1202, configured to generate a first PTK based on the first PMK and a second DHss, wherein the second DHss is a shared key generated based on a public key of a supplicant of the STA and a public key of an authenticator of the AP.

In some embodiments, the first field indicates that the extended PASN supporting FILS shared key authentication with perfect forward security is used for authentication; the apparatus further includes: a first key module 1202, configured to generate a second PMK based on a third DHss, wherein the third DHss is a shared key generated based on a public key of a supplicant of the STA and a public key of an authenticator of the AP.

In some embodiments, the apparatus further includes: a first key module 1202, configured to generate a second PTK based on the second PMK and the third DHss.

In some embodiments, the first field indicates that the extended PASN supporting FILS public key authentication is used for authentication. The authentication frame further includes at least one of a PMK public key field, a PMK public key length field, a PMK finite cyclic group field, or a PMK group and key present field.

In some embodiments, at least one of the PMK public key field, the PMK public key length field, or the PMK finite cyclic group field is carried in the wrapped data element field of the authentication frame.

In some embodiments, at least one of the PMK public key field, the PMK public key length field, or the PMK finite cyclic group field is carried in the wrapped data element field of the authentication frame. The PMK finite cyclic group field is carried in a control field of the authentication frame.

In some embodiments, the authentication frame further includes a PMK public key; the apparatus further includes: a first key module 1202, configured to generate a third PMK based on a fourth DHss, wherein the fourth DHss is a shared key generated based on the PMK public key of the STA and the PMK public key of the AP.

In some embodiments, the apparatus further includes: a first key module 1202, configured to generate a third PTK based on the third PMK and a fifth DHss, wherein the fifth DHss is a shared key generated based on a public key of a supplicant of the STA and a public key of an authenticator of the AP.

In some embodiments, the first field indicates that the extended PASN supporting 802.1X authentication is used for authentication. The authentication frames include a fourth authentication frame transmitted by the AP to the STA.

In some embodiments, the authentication frames include: a first authentication frame transmitted by the STA to the AP, wherein a wrapped data format field of the first authentication frame indicates the start of an EAPOL; a second authentication frame transmitted by the AP to the STA, wherein a wrapped data format field of the second authentication frame indicates an EAP request/identity message; a third authentication frame transmitted by the STA to the AP, wherein a wrapped data format field of the third authentication frame indicates an EAP response; and the fourth authentication frame, wherein a wrapped data format field of the fourth authentication frame indicates an EAP success.

In some embodiments, the PTK generated in the authentication process is used to encrypt and decrypt an association process message.

In some embodiments, the PTK generated in the authentication process is used to encrypt and decrypt a data communication message.

In some embodiments, the data communication message includes a group key handshake message, wherein the group key handshake message is used to distribute at least one of a GTK, an IGTK, or a BIGTK.

In some embodiments, the PTK generated in the authentication process is used to encrypt and decrypt a 4-way handshake message.

In some embodiments, the apparatus further includes: a first handshake module 1203, configured to create an updated PTK using a 4-way handshake process. The updated PTK is used to encrypt and decrypt a data communication message.

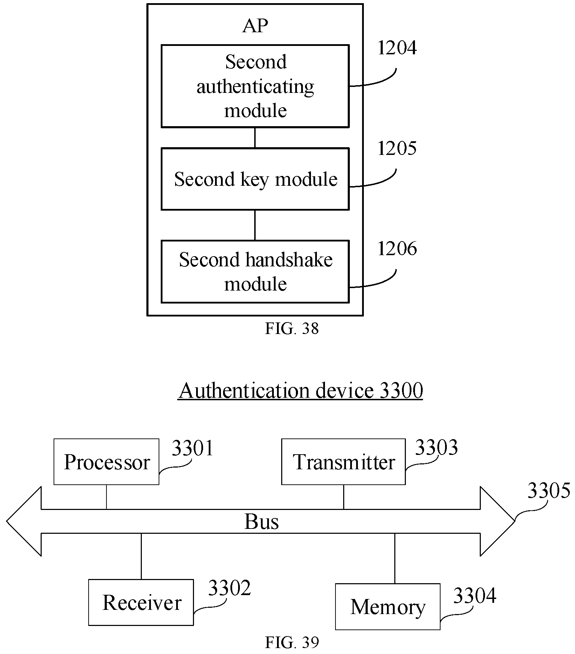

FIG. 38 is a block diagram of an apparatus for authentication according to some embodiments of the present disclosure. The apparatus is configured to be an AP or a part of an AP. The apparatus includes: a second authenticating module 1204.

The second authenticating module 1204 is configured to perform an authentication process by transmitting authentication frames between the AP and an STA, wherein a first field in the authentication frame indicates at least one of the following authentication modes is used: extended PASN supporting FILS shared key authentication with perfect forward security, extended PASN supporting FILS public key authentication, or extended PASN supporting 802.1X authentication.

In some embodiments, the first field includes an authentication algorithm number field and a wrapped data format field.

In some embodiments, the authentication algorithm number field being 7 and the wrapped data format field being a first newly added value indicate that the extended PASN supporting FILS shared key authentication with perfect forward security is used for authentication; or the authentication algorithm number field being a second newly added value and the wrapped data format field being the first newly added value indicate that the extended PASN supporting FILS shared key authentication with perfect forward security is used for authentication.

In some embodiments, the authentication algorithm number field being 7 and the wrapped data format field being a third newly added value indicate that the extended PASN supporting FILS public key authentication is used for authentication; or the authentication algorithm number field being a fourth newly added value and the wrapped data format field being a third newly added value indicate that the extended PASN supporting FILS public key authentication is used for authentication.

In some embodiments, the authentication algorithm number field being 7 and the wrapped data format field being a fifth newly added value indicate that the extended PASN supporting 802.1X authentication is used for authentication; or the authentication algorithm number field being a sixth newly added value and the wrapped data format field being a fifth newly added value indicate that the extended PASN supporting 802.1X authentication is used for authentication.

In some embodiments, the first field indicates the extended PASN supporting FILS shared key authentication with perfect forward security is used for authentication. The authentication frame further includes at least one of a PMK public key field, a PMK public key length field, a PMK finite cyclic group field, or a PMK group and key present field.

In some embodiments, the authentication frame further includes a PMK public key; the apparatus further includes: a second key module 1205, configured to generate a first PMK based on a first DHss, wherein the first DHss is a shared key generated based on the PMK public key of the STA and the PMK public key of the AP.

In some embodiments, the apparatus further includes: a second key module 1205, configured to generate a first PTK based on the first PMK and a second DHss, wherein the second DHss is a shared key generated based on a public key of a supplicant of the STA and a public key of an authenticator of the AP.

In some embodiments, the first field indicates that the extended PASN supporting FILS shared key authentication with perfect forward security is used for authentication; the apparatus further includes: a second key module 1205, configured to generate a second PMK based on a third DHss, wherein the third DHss is a shared key generated based on a public key of a supplicant of the STA and a public key of an authenticator of the AP.

In some embodiments, the apparatus further includes: a second key module 1205, configured to generate a second PTK based on the second PMK and the third DHss.

In some embodiments, the first field indicates that the extended PASN supporting FILS public key authentication is used for authentication. The authentication frame further includes at least one of a PMK public key field, a PMK public key length field, a PMK finite cyclic group field, or a PMK group and key present field.

In some embodiments, at least one of the PMK public key field, the PMK public key length field, or the PMK finite cyclic group field is carried in the wrapped data element field of the authentication frame.

In some embodiments, at least one of the PMK public key field, the PMK public key length field, or the PMK finite cyclic group field is carried in the wrapped data element field of the authentication frame. The PMK finite cyclic group field is carried in a control field of the authentication frame.

In some embodiments, the authentication frame further includes a PMK public key; the apparatus further includes: a second key module 1205, configured to generate a third PMK based on a fourth DHss, wherein the fourth DHss is a shared key generated based on the PMK public key of the STA and the PMK public key of the AP.

In some embodiments, the apparatus further includes: a second key module 1205, configured to generate a third PTK based on the third PMK and a fifth DHss, wherein the fifth DHss is a shared key generated based on a public key of a supplicant of the STA and a public key of an authenticator of the AP.

In some embodiments, the first field indicates that the extended PASN supporting 802.1X authentication is used for authentication. The authentication frames include a fourth authentication frame transmitted by the AP to the STA.

In some embodiments, the authentication frames include: a first authentication frame transmitted by the STA to the AP, wherein a wrapped data format field of the first authentication frame indicates the start of an EAPOL; a second authentication frame transmitted by the AP to the STA, wherein a wrapped data format field of the second authentication frame indicates an EAP request/identity message; a third authentication frame transmitted by the STA to the AP, wherein a wrapped data format field of the third authentication frame indicates an EAP response; and the fourth authentication frame, wherein a wrapped data format field of the fourth authentication frame indicates an EAP success.

In some embodiments, the PTK generated in the authentication process is used to encrypt and decrypt an association process message.

In some embodiments, the PTK generated in the authentication process is used to encrypt and decrypt a data communication message.

In some embodiments, the data communication message includes a group key handshake message. The group key handshake message is used to distribute at least one of a GTK, an IGTK, or a BIGTK.

In some embodiments, the PTK generated in the authentication process is used to encrypt and decrypt a 4-way handshake message.

In some embodiments, the apparatus further includes: a second handshake module 1206, configured to create an updated PTK using a 4-way handshake process. The updated PTK is used to encrypt and decrypt a data communication message.

It should be noted that when implementing the functions of the apparatus according to the above embodiments, the division of the various functional modules is merely exemplary. In practice, the above functions may be assigned to different functional modules based on actual needs, i.e., the content structure of the device can be divided into different functional modules to accomplish all or part of the above functions.

With regard to the apparatus in the above embodiments, the specific mode in which each module performs the operation has been described in detail in the embodiments related to the method and will not be described in detail any further.

FIG. 39 is a schematic structural diagram of an authentication device (an STA or an AP) according to some embodiments of the present disclosure. The authentication device 3300 includes: a processor 3301, a receiver 3302, a transmitter 3303, a memory 3304, and a bus 3305.

The processor 3301 includes one or more processing cores, and the processor 3301 executes various functional applications and performs information processing by running software programs and modules.

The receiver 3302 and the transmitter 3303 may be implemented as one communication assembly, which may be a communication chip.

The memory 3304 is connected to the processor 3301 over the bus 3305. The memory 3304 is configured to store at least one instruction, and the processor 3301, when loading and executting the at least one instruction, is caused to perform the processes in the above method embodiments.

In addition, the memory 3304 may be implemented by any type or combination of volatile or non-volatile storage devices including, but not limited to: magnetic or optical disks, electrically erasable programmable read-only memories (EEPROMs), erasable programmable read-only memories (EPROMs), static random access memories (SRAMs), read-only memories (ROMs), magnetic memories, flash memories, or programmable read-only memories (PROMs).

In some embodiments, a computer-readable storage medium is further provided. The computer-readable storage medium stores at least one program. The at least one program, when loaded and run by a processor, causes the processor to perform the method for authentication according to the method embodiments described above.

In some embodiments, a chip is further provided. The chip includes one or more programmable logic circuits and/or one or more program instructions. The chip, when running on a communication device, causes the communication device to perform the method for authentication according to the method embodiments described above.

In some embodiments, a computer program product is further provided. The computer program product, when running on a processor of a communication device, causes the communication device to perform the method for authentication described above.

Those skilled in the art should recognize that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described above are merely optional embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for authentication, applicable to a station (STA), the method comprising:
performing an authentication process by transmitting authentication frames between the STA and an access point (AP), wherein a first field in the authentication frame indicates that at least one of the following authentication modes is used: extended pre-association security negotiation (PASN) supporting fast initial link setup (FILS) shared key authentication with perfect forward security, extended PASN supporting FILS public key authentication, or extended PASN supporting 802.1X authentication.

2. The method according to claim 1, wherein the first field comprises an authentication algorithm number field and a wrapped data format field.

3. The method according to claim 2, wherein
the authentication algorithm number field being assigned a value of 7 and the wrapped data format field being assigned a first newly added value indicate that the extended PASN supporting FILS shared key authentication with perfect forward security is used for authentication; or
the authentication algorithm number field being assigned a second newly added value and the wrapped data format field being assigned a first newly added value indicate that the extended PASN supporting FILS shared key authentication with perfect forward security is used for authentication.

4. The method according to claim 2, wherein
the authentication algorithm number field being assigned a value of 7 and the wrapped data format field being assigned a third newly added value indicate that the extended PASN supporting FILS public key authentication is used for authentication; or
the authentication algorithm number field being assigned a fourth newly added value and the wrapped data format field being assigned a third newly added value indicate that the extended PASN supporting FILS public key authentication is used for authentication.

5. The method according to claim 2, wherein
the authentication algorithm number field being assigned a value of 7 and the wrapped data format field being assigned a fifth newly added value indicate that the extended PASN supporting 802.1X authentication is used for authentication;
or, the authentication algorithm number field being assigned a sixth newly added value and the wrapped data format field being assigned a fifth newly added value indicate that the extended PASN supporting 802.1X authentication is used for authentication.

6. The method according to any one of claims 1 to 5, wherein the first field indicates that the extended PASN supporting FILS shared key authentication with perfect forward security is used for authentication; and
the authentication frame further comprises at least one of a pairwise master key (PMK) public key field, a PMK public key length field, a PMK finite cyclic group field, or a PMK group and key present field.

7. The method according to claim 6, wherein the authentication frame further comprises a PMK public key; and the method further comprises:
generating a first PMK based on a first DHss,
wherein the first DHss is a shared key generated based on the PMK public key of the STA and the PMK public key of the AP.

8. The method according to claim 7, further comprising:
generating a first pairwise transient key (PTK) based on the first PMK and a second DHss,
wherein the second DHss is a shared key generated based on a public key of a supplicant of the STA and a public key of an authenticator of the AP.

9. The method according to any one of claims 1 to 5, wherein the first field indicates that the extended PASN supporting FILS shared key authentication with perfect forward security is used for authentication; and the method further comprises:
generating a second pairwise master key (PMK) based on a third DHss,
wherein the third DHss is a shared key generated based on a public key of a supplicant of the STA and a public key of an authenticator of the AP.

10. The method according to claim 9, further comprising:
generating a second pairwise transient key (PTK) based on the second PMK and the third DHss.

11. The method according to any one of claims 1 to 5, wherein the first field indicates the extended PASN supporting FILS public key authentication is used for authentication; and
the authentication frame further comprises at least one of a pairwise master key (PMK) public key field, a PMK public key length field, a PMK finite cyclic group field, or a PMK group and key present field.

12. The method according to claim 11, wherein at least one of the PMK public key field, the PMK public key length field, or the PMK finite cyclic group field is carried in a wrapped data element field of the authentication frame.

13. The method according to claim 11, wherein
at least one of the PMK public key field, the PMK public key length field, or the PMK finite cyclic group field is carried in a wrapped data element field of the authentication frame; and
the PMK finite cyclic group field is carried in a control field of the authentication frame.

14. The method according to any one of claims 11 to 13, wherein the authentication frame further comprises a PMK public key; and the method further comprises:
generating a third PMK based on a fourth DHss,
wherein the fourth DHss is a shared key generated based on the PMK public key of the STA and the PMK public key of the AP.

15. The method according to claim 14, further comprising:
generating a third pairwise transient key (PTK) based on the third PMK and a fifth DHss,
wherein the fifth DHss is a shared key generated based on a public key of a supplicant of the STA and a public key of an authenticator of the AP.

16. The method according to any one of claims 1 to 5, wherein
the first field indicates that the extended PASN supporting 802.1X authentication is used for authentication; and
the authentication frame comprises a fourth authentication frame transmitted by the AP to the STA.

17. The method according to claim 16, wherein the authentication frames comprise:
a first authentication frame transmitted by the STA to the AP, wherein a wrapped data format field of the first authentication frame indicates a start of an Extensible Authentication Protocol over LAN (EAPOL);
a second authentication frame transmitted by the AP to the STA, wherein a wrapped data format field of the second authentication frame indicates an Extensible Authentication Protocol (EAP) request/identity message;
a third authentication frame transmitted by the STA to the AP, wherein a wrapped data format field of the third authentication frame indicates an EAP response; and
the fourth authentication frame, wherein a wrapped data format field of the fourth authentication frame indicates an EAP success.

18. The method according to any one of claims 1 to 17, wherein a pairwise transient key (PTK) generated in the authentication process is used to encrypt and decrypt an association process message.

19. The method according to any one of claims 1 to 17, wherein a pairwise transient key (PTK) generated in the authentication process is used to encrypt and decrypt a data communication message.

20. The method according to claim 19, wherein the data communication message comprises a group key handshake message, wherein the group key handshake message is used to distribute at least one of a group temporal key (GTK), an integrity group temporal key (IGTK), or a Beacon integrity group temporal key (BIGTK).

21. The method according to any one of claims 1 to 17, wherein a pairwise transient key (PTK) generated in the authentication process is used to encrypt and decrypt a 4-way handshake message.

22. The method according to claim 21, further comprising:
creating an updated PTK using a 4-way handshake process, wherein the updated PTK is used to encrypt and decrypt a data communication message.

23. A method for authentication, applicable to an access point (AP), the method comprising:
performing an authentication process by transmitting an authentication frame with a station (STA), wherein a first field in the authentication frame indicates that at least one of the following authentication modes is used: extended pre-association security negotiation (PASN) supporting fast initial link setup (FILS) shared key authentication with perfect forward security, extended PASN supporting FILS public key authentication, or extended PASN supporting 802.1X authentication.

24. The method according to claim 23, wherein the first field comprises an authentication algorithm number field and a wrapped data format field.

25. The method according to claim 24, wherein
the authentication algorithm number field being assigned a value of 7 and the wrapped data format field being assigned a first newly added value indicate that the extended PASN supporting FILS shared key authentication with perfect forward security is used for authentication;
or, the authentication algorithm number field being assigned a second newly added value and the wrapped data format field being assigned a first newly added value indicate that the extended PASN supporting FILS shared key authentication with perfect forward security is used for authentication.

26. The method according to claim 24, wherein
the authentication algorithm number field being assigned a value of 7 and the wrapped data format field being assigned a third newly added value indicate that the extended PASN supporting FILS public key authentication is used for authentication; or
the authentication algorithm number field being assigned a fourth newly added value and the wrapped data format field being assigned a third newly added value indicate that t the extended PASN supporting FILS public key authentication is used for authentication.

27. The method according to claim 24, wherein
the authentication algorithm number field being assigned a value of 7 and the wrapped data format field being assigned a fifth newly added value indicate that the extended PASN supporting 802.1X authentication is used for authentication; or
the authentication algorithm number field being assigned a sixth newly added value and the wrapped data format field being assigned a fifth newly added value indicate that the extended PASN supporting 802.1X authentication is used for authentication.

28. The method according to any one of claims 23 to 27, wherein the first field indicates that the extended PASN supporting FILS shared key authentication with perfect forward security is used for authentication; and
the authentication frame further comprises at least one of a pairwise master key (PMK) public key field, a PMK public key length field, a PMK finite cyclic group field, or a PMK group and key present field.

29. The method according to claim 28, wherein the authentication frame further comprises a PMK public key; the method further comprises:
generating a first PMK based on a first DHss,
wherein the first DHss is a shared key generated based on the PMK public key of the STA and the PMK public key of the AP.

30. The method according to claim 29, further comprising:
generating a first pairwise transient key (PTK) based on the first PMK and a second DHss,
wherein the second DHss is a shared key generated based on a public key of a supplicant of the STA and a public key of an authenticator of the AP.

31. The method according to any one of claims 23 to 27, wherein the first field indicates that the extended PASN supporting FILS shared key authentication with perfect forward security is used for authentication; the method further comprises:
generating a second pairwise master key (PMK) based on a third DHss,
wherein the third DHss is a shared key generated based on a public key of a supplicant of the STA and a public key of an authenticator of the AP.

32. The method according to claim 31, further comprising:
generating a second pairwise transient key (PTK) based on the second PMK and the third DHss.

33. The method according to any one of claims 23 to 27, wherein
the first field indicates that the extended PASN supporting FILS public key authentication is used for authentication; and
the authentication frame further comprises at least one of a pairwise master key (PMK) public key field, a PMK public key length field, a PMK finite cyclic group field, or a PMK group and key present field.

34. The method according to claim 33, wherein at least one of the PMK public key field, the PMK public key length field, or the PMK finite cyclic group field is carried in a wrapped data element field of the authentication frame.

35. The method according to claim 33, wherein at least one of the PMK public key field, the PMK public key length field, or the PMK finite cyclic group field is carried in a wrapped data element field of the authentication frame; and
the PMK finite cyclic group field is carried in a control field of the authentication frame.

36. The method according to any one of claims 33 to 35, wherein the authentication frame further comprises a PMK public key; and the method further comprises:
generating a third PMK based on a fourth DHss,
wherein the fourth DHss is a shared key generated based on the PMK public key of the STA and the PMK public key of the AP.

37. The method according to claim 36, further comprising:
generating a third pairwise transient key (PTK) based on the third PMK and a fifth DHss,
wherein the fifth DHss is a shared key generated based on a public key of a supplicant of the STA and a public key of an authenticator of the AP.

38. The method according to any one of claims 23 to 27, wherein
the first field indicates that the extended PASN supporting 802.1X authentication is used for authentication; and
the authentication frame comprises a fourth authentication frame transmitted by the AP to the STA.

39. The method according to claim 38, wherein the authentication frame comprises:
a first authentication frame transmitted by the STA to the AP, wherein a wrapped data format field of the first authentication frame indicates a start of an Extensible Authentication Protocol over LAN (EAPOL);
a second authentication frame transmitted by the AP to the STA, wherein a wrapped data format field of the second authentication frame indicates an Extensible Authentication Protocol (EAP) request/identity message;
a third authentication frame transmitted by the STA to the AP, wherein a wrapped data format field of the third authentication frame indicates an EAP response; and
the fourth authentication frame, wherein a wrapped data format field of the fourth authentication frame indicates an EAP success.

40. The method according to any one of claims 23 to 39, wherein a pairwise transient key (PTK) generated in the authentication process is used to encrypt and decrypt an association process message.

41. The method according to any one of claims 23 to 39, wherein a pairwise transient key (PTK) generated in the authentication process is used to encrypt and decrypt a data communication message.

42. The method according to claim 41, wherein the data communication message comprises a group key handshake,
wherein the group key handshake message is used to distribute at least one of a group temporal key (GTK), an integrity group temporal key (IGTK), or a Beacon integrity group temporal key (BIGTK).

43. The method according to any one of claims 23 to 39, wherein a pairwise transient key (PTK) generated in the authentication process is used to encrypt and decrypt a 4-way handshake message.

44. The method according to claim 43, further comprising:
creating an updated PTK using a 4-way handshake process, wherein the updated PTK is used to encrypt and decrypt a data communication message.

45. An apparatus for authentication, applicable to a station (STA), comprising:
a first authenticating module, configured to perform an authentication process by transmitting an authentication frame between the STA and an access point (AP), wherein a first field in the authentication frame indicates at least one of the following authentication modes is used: extended pre-association security negotiation (PASN) supporting fast initial link setup (FILS) shared key authentication with perfect forward security, extended PASN supporting FILS public key authentication, or extended PASN supporting 802.1X authentication.

46. An apparatus for authentication, applicable to an access point (AP), the apparatus comprising:
a second authenticating module, configured to perform an authentication process by transmitting an authentication frame between the AP and a station (STA), wherein a first field in the authentication frame indicates at least one of the following authentication modes is used: extended pre-association security negotiation (PASN) supporting fast initial link setup (FILS) shared key authentication with perfect forward security, extended PASN supporting FILS public key authentication, or extended PASN supporting 802.1X authentication.

47. A station (STA) device, comprising:
a processor;
a transceiver, connected to the processor; and
a memory, configured to store one or more executable instructions of the processor,
wherein the processor, when loading and executing, the one or more executable instructions, causes the STA device to perform the method for authentication as defined in any one of claims 1 to 22.

48. An access point (AP) device, comprising:
a processor;
a transceiver, connected to the processor; and
a memory, configured to store one or more executable instructions of the processor,
wherein the processor, when loading and executing, the one or more executable instructions, causes the AP device to perform the method for authentication as defined in any one of claims 23 to 44.

49. A computer-readable storage medium, storing one or more executable instructions, wherein the one or more executable instructions, when loaded and executed by a processor, cause a communication device to perform the method for authentication as defined in any one of claims 1 to 44.

50. A chip, comprising one or more programmable logic circuits or one or more programs, wherein a communication device equipped with the chip, when running the one or more programmable logic circuits or the one or more programs, is caused to perform the method for authentication as defined in any one of claims 1 to 44.

51. A computer program product, comprising one or more computer instructions stored in a computer-readable storage medium, wherein the one or more computer instructions, when read by a processor of a communication device from the computer-readable storage medium and executed by the processor, cause the communication device to perform the method for authentication as defined in any one of claims 1 to 44.
